Europäisches Patentamt

European Patent Office

Office européen des brevets

(19)

(11) Numéro de publication: **0 237 365**
**B1**

(12) ## FASCICULE DE BREVET EUROPEEN

(45) Date de publication du fascicule du brevet:
**03.10.90**

(51) Int. Cl.⁵: **H04N 3/15**

(21) Numéro de dépôt: **87400099.5**

(22) Date de dépôt: **16.01.87**

(54) **Dispositif photosensible.**

(30) Priorité: **24.01.86 FR 8601054**

(43) Date de publication de la demande:
**16.09.87 Bulletin 87/38**

(45) Mention de la délivrance du brevet:
**03.10.90 Bulletin 90/40**

(84) Etats contractants désignés:
**DE GB NL**

(56) Documents cités:
**EP-A- 0 045 677**
**US-A- 3 521 244**

(73) Titulaire: **THOMSON-CSF, 51, Esplanade du Général de Gaulle, F-92800 Puteaux(FR)**

(72) Inventeur: **Arques, Marc, THOMSON-CSF SCPI 19, avenue de Messine, F-75008 Paris(FR)**

(74) Mandataire: **Mayeux, Michèle et al, THOMSON-CSF SCPI, F-92045 PARIS LA DEFENSE CEDEX 67(FR)**

ACTORUM AG

## Description

La présente invention concerne un dispositif photosensible à l'état solide.

Il est bien connu de réaliser des dispositifs photosensibles à l'état solide, du type comportant :
- un réseau de connexions horizontales ou lignes et un réseau de connexions verticales ou colonnes qui se croisent ;
- un élément photosensible qui relie chaque ligne et chaque colonne qui se croisent ;
- un circuit d'adressage dont les sorties sont reliées aux lignes ;
- un circuit de lecture et de multiplexage dont les entrées sont reliées aux colonnes.

Dans tous ces dispositifs photosensibles, on cherche à simplifier au maximum les schémas et les technologies utilisés pour réaliser les éléments photosensibles de façon à augmenter les rendements de fabrication. On cherche aussi à diminuer les capacités des différentes connexions ce qui permet de simplifier les circuits électroniques reliés au dispositif. On cherche enfin à réduire les courants d'obscurité des éléments photosensibles qui sont néfastes.

Ces préoccupations sont d'autant plus importantes lorsqu'il faut réaliser des dispositifs photosensibles de grandes dimensions, comme c'est le cas pour l'imagerie des rayons X où l'on ne sait pas focaliser le rayonnement.

La présente invention concerne un dispositif photosensible pouvant être utilisé pour la détection aussi bien d'un rayonnement visible, que de rayons X ou de n'importe quel autre type de rayonnement. Pour la détection de rayons X, on peut interposer un scintillateur, en oxyde de gadolinium par exemple, de façon à convertir le rayonnement X en rayonnement visible détecté par des photodiodes. On peut aussi réaliser les détecteurs dans n'importe quel semiconducteur que l'on sait réaliser avec une épaisseur suffisante pour assurer la détection directe des rayons X .

Il faut signaler que le dispositif selon l'invention n'est utilisable que s'il existe une phase d'éclairement signal et une phase de lecture du dispositif qui sont disjointes dans le temps.

La présente invention concerne un dispositif photosensible comportant :
- un réseau de connexions horizontales ou lignes et un réseau de connexions verticales ou colonnes qui se croisent ;
- un élément photosensible qui relie chaque ligne et chaque colonne qui se croisent ;
- un circuit d'adressage dont les sorties sont reliées aux lignes ;
- un circuit de lecture et de multiplexage dont les entrées sont reliées aux colonnes ;
caractérisé en ce que :

1°) chaque élément photosensible est constitué par la mise en série d'une capacité, d'une photodiode et d'un interrupteur électronique ;

La présente invention concerne également un procédé de lecture d'un dispositif photosensible comportant les étapes suivantes:

1°) l'un des réseaux de connexions du dispositif reçoit, périodiquement, des impulsions de tension $V_{P1}$ qui font passer toutes les photodiodes du dispositif à l'état direct puis à l'état inverse, les interrupteurs étant fermés, alors que l'autre réseau est porté à un potentiel constant ;

2°) entre deux impulsions de tension $V_{P1}$ successives :
- le signal lumineux à lire est appliqué au dispositif ;
- tous les interrupteurs sont ouverts ;
- on lit les éléments photosensibles reliés à chaque ligne du dispositif et pour cela, on ferme les interrupteurs des éléments photosensibles d'une ligne sélectionnée et le circuit d'adressage envoie sur cette ligne une impulsion de tension $V_{P2}$, qui fait passer les photodiodes de cette ligne à l'état direct puis à l'état inverse, l'amplitude de l'impulsion de tension $V_{P2}$ étant supérieure à celle de l'impulsion de tension $V_{P1}$, puis le circuit de lecture et de multiplexage assure la lecture de chaque photodiode de la ligne sélectionnée en sommant les charges qui circulent en commençant avant que les interrupteurs de la ligne sélectionnée soient fermés et en poursuivant au moins jusqu'à ce que l'impulsion $V_{P2}$ soit appliquée à la ligne sélectionnée, on ouvre ensuite les interrupteurs des éléments photosensibles de la ligne lue et on lit les éléments photosensibles reliés à une autre ligne du dispositif, et ainsi de suite jusqu'à ce que tout le dispositif soit lu,
- on remet à zéro les photodiodes et on ferme les interrupteurs au moins avant l'impulsion de tension $V_{P1}$ suivante.

La présente invention concerne un dispositif photosensible présentant de nombreux avantages parmi lesquels on peut citer :
- le fait que dans ses modes de réalisation préférés, le dispositif selon l'invention comporte des éléments photosensibles ne nécessitant que la réalisation de diodes et de capacités. Ces éléments photosensibles sont donc particulièrement simples à réaliser ;

- le fait que le dispositif selon l'invention présente de faibles capacités de connexion. Chaque colonne du dispositif est reliée à un amplificateur opérationnel, présentant une tension de bruit $e_n$ qui crée à l'entrée de l'amplificateur un courant de bruit de valeur $e_n.C.w$, où C est la capacité de la colonne et w la pulsation de travail. Pour diminuer ce courant de bruit qui passe en sortie de l'amplificateur, il faut diminuer la capacité des colonnes. De même, la capacité des colonnes influe sur la vitesse de transit des signaux sur les colonnes. Selon l'invention, on réduit notablement les capacités de connexion du fait de l'utilisation d'un interrupteur électronique dans chaque élément photosensible du dispositif. Lors de la lecture d'une ligne d'éléments photosensibles, les interrupteurs appartenant aux éléments photosensibles des autres lignes du dispositif sont ouverts. Toutes ces autres lignes ne sont en contact avec les colonnes, dans le cas ou chaque interrupteur est constitué par deux diodes $d_1$ et $d_2$ tête-bêche, que par l'intermédiaire de trois capacités, en parallèle qui, sont les capacités $C_{d1}$ et $C_{d2}$ des diodes $d_1$ et $d_2$ à l'état bloqué et la capacité de croisement $C_c$ des lignes et des colonnes. Ces capacités $C_{d1}$, $C_{d2}$ et $C_c$ sont faibles. La ligne qui est lue est en contact avec les colonnes par la capacité $C_G$ appartenant à chaque élément photosensible. En conséquence, la capacité $C_{col}$ d'une colonne d'un dispositif de q lignes, qui est vue par le circuit de lecture et de multiplexage lorsqu'on lit une ligne vaut :

$$C_{col} = C_G + (q-1) . (C_{d1} + C_{d2} + C_c)$$

$$C_{col} \simeq (q-1) . (C_{d1} + C_{d2} + C_c), \text{ lorsque q est grand.}$$

Cette capacité $C_{col}$ peut être modérée et permet la conception d'un circuit de lecture et de multiplexage relativement simple ;
- le fait que le dispositif selon l'invention ne prenne en compte qu'une faible partie du courant d'obscurité des éléments photosensibles.

En effet, les interrupteurs montés en série dans les éléments photosensibles permettent de déconnecter chaque ligne d'éléments photosensibles des colonnes lorsqu'on lit les autres lignes du dispositif. Ainsi les éléments photosensibles d'une ligne qui n'est pas lue n'injectent pas leur courant d'obscurité dans les colonnes lorsqu'on lit d'autres lignes. La lecture d'une ligne n'est pas perturbée par les autres lignes qui ne sont pas lues. On supprime la "diaphotie" et le "smearing".

De plus, lorsqu'on lit une ligne d'éléments photosensibles, on ferme les interrupteurs de cette ligne. Les photodiodes injectent alors dans les colonnes la charge d'obscurité, stockée alors que ces interrupteurs étaient ouverts et qu'on lisait les autres lignes. Ensuite, l'impulsion d'adressage $V_{p2}$ fait circuler de nouveau cette même charge mais en sens inverse. En sommant les charges qui circulent depuis l'instant ou l'on ferme les interrupteurs d'une ligne sélectionnée et jusqu'à l'instant où l'on applique l'impulsion d'adressage $V_{p2}$, on arrive à lire chaque ligne d'éléments photosensibles et à compenser la charge d'obscurité stockée par cette ligne lorsqu'on lisait les autres lignes.

Il faut signaler que cette compensation est beaucoup plus efficace que celle réalisée par d'autres systèmes de compensation et qui consistent à mémoriser la valeur moyenne du courant d'obscurité pour la soustraire de la charge lue sur chaque élément photosensible car la compensation réalisée selon l'invention est exacte ;
- le fait que dans le dispositif selon l'invention on réalise une lecture rapide et de bonne qualité des photodiodes du fait de l'utilisation pour lire chaque ligne d'une impulsion de lecture $V_{p2}$ dont l'amplitude est supérieure à celle des impulsions $V_{P1}$ utilisées en début de cycle pour faire passer les photodiodes d'abord en direct puis en inverse et pour les pré-charger. L'utilisation d'impulsions $V_{P2}$ oblige à effectuer en fin de cycle une opération de remise à zéro des photodiodes.

D'autres objets, caractéristiques et résultats de l'invention ressortiront de la description suivante, donnée à titre d'exemple non limitatif et illustrée par les figures annexées qui représentent ;

- les figures 1, 4 et 5, un schéma d'un mode de réalisation du dispositif selon l'invention ;
- les figures 2a à 2f et 6a à 6f, un chronogramme du dispositif des figures 1 et 5 ;
- les figures 3a, b et c, des caractéristiques I = f(V) et C = f(V) des diodes utilisées ;
- les figures 7, 8a à 8c, et 9 : des schémas concernant un mode de réalisation technologique d'un élément photosensible selon le mode de réalisation de la figure 5 ;
- les figures 10, 11a à j et 12a à h, un mode de réalisation du circuit d'adressage 2 des figures 1, 4 et 5, et deux chronogrammes ;
- les figures 13, 14 et 15, deux modes de réalisation particuliers du circuit de lecture et de multiplexage et le chronogramme de la figure 14.

Sur les différentes figures, les mêmes repères désignent les mêmes éléments, mais, pour des raisons de clarté, les cotes et proportions des divers éléments ne sont pas respectées.

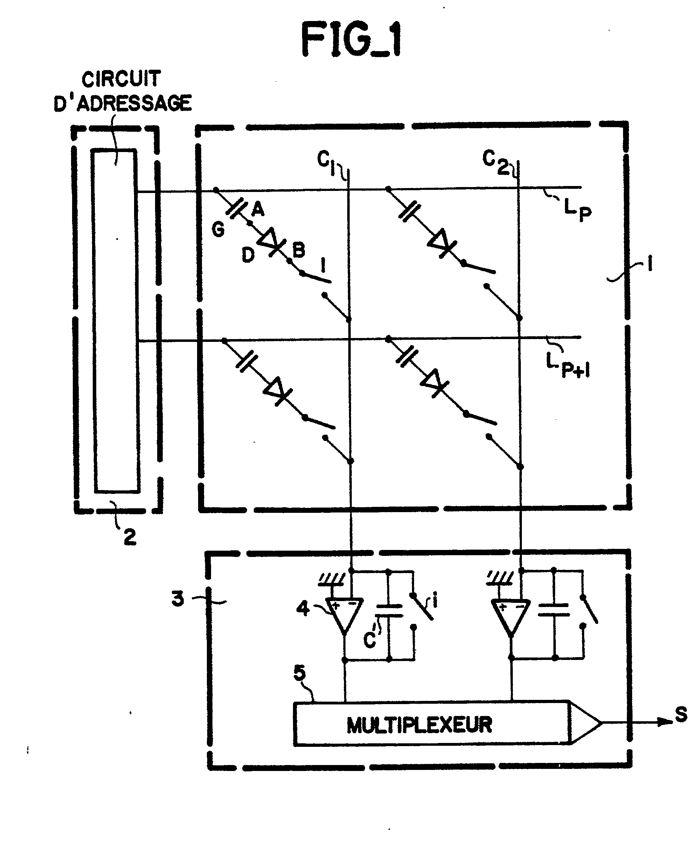

La figure 1 représente le schéma d'un mode de réalisation du dispositif photosensible selon l'invention.

Ce dispositif comporte une matrice photosensible 1 comportant un réseau de connexions horizontales ou lignes et un réseau de connexions verticales ou colonnes.

Sur la figure 1, on n'a représenté pour expliquer le fonctionnement du dispositif qu'une matrice 2×2, avec deux lignes $L_P$ et $L_{p+1}$ et deux colonnes $C_1$ et $C_2$.

Les lignes et les colonnes se croisent, sans être bien entendu en contact, et un élément photosensible relie chaque ligne et chaque colonne qui se croisent.

Selon l'invention, chaque élément photosensible est constitué par la mise en série d'une capacité G, d'une photodiode D, en silicium amorphe par exemple, et d'un interrupteur électronique I.

Dans le mode de réalisation de la figure 1, on trouve en allant d'une ligne vers une colonne, la capacité G, puis la photodiode D dont l'anode est reliée à la capacité G en un point A et dont la cathode est reliée en un point B à l'interrupteur I connecté à une colonne.

L'invention s'applique quelle que soit la position respective des composants faisant partie de l'élément photosensible. On peut aussi inverser la position de l'anode et de la cathode de la photodiode D, c'est-à-dire par exemple dans le mode de réalisation de la figure 1, relier sa cathode au point A et son anode au point B. Cela entraîne des modifications des signaux de commande, des tensions aux points A et B et des charges qui circulent par rapport au mode de réalisation de la figure 1 qui va être décrit de façon détaillée ci-après. Ces modifications sont facilement accessibles à l'homme du métier.

Le dispositif de la figure 1 comporte également un circuit d'adressage 2 dont les sorties sont reliées aux lignes de la matrice et un circuit de lecture et de multiplexage 3 dont les entrées sont reliées aux colonnes de la matrice.

On a représenté sur la figure 1 un mode de réalisation du circuit de lecture et de multiplexage 3 dans lequel chaque colonne de la matrice est reliée à l'entrée négative d'un amplificateur opérationnel 4 dont l'entrée positive est à une tension constante qui peut être la masse du dispositif. Ces amplificateurs sont montés en intégrateurs et comportent une capacité C' connectée entre leur entrée négative et leur sortie. Un interrupteur i est monté en parallèle sur chaque capacité C' pour assurer sa remise à zéro. Les sorties des amplificateurs sont reliées à un multiplexeur 5, du type réseau d'interrupteurs ou CCD par exemple, dont la sortie fournit le signal de sortie S du dispositif.

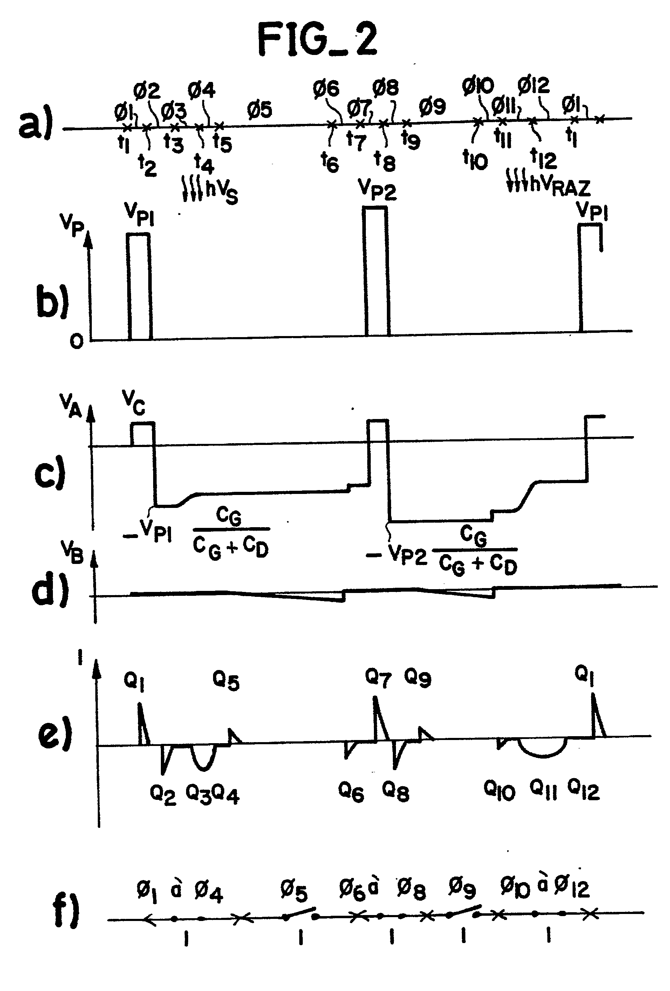

On sait que les amplificateurs opérationnels montés en intégrateurs recopient sur leur entrée négative la polarisation de leur entrée positive. Dans le cas de la figure 1, l'entrée positive des amplificateurs est à une tension constante, par exemple à la masse du dispositif. Ces amplificateurs relient donc à la masse les colonnes qui sont reliées à leur entrée négative. On va décrire en se référant au chronogramme de la figure 2 le fonctionnement du disposiif de la figure 1 et plus particulièrement le fonctionnement d'un élément photosensible du dispositif de la figure 1, par exemple l'élément situé à l'intersection de la colonne $C_1$ et de la $p^{ième}$ ligne $L_p$ de la matrice.

Dans ce qui suit, on compte positivement les courants et les charges circulant depuis chaque élément photosensible vers l'amplificateur intégrateur situé en bas des colonnes.

Sur la figure 2a, on a représenté les instants $t_1$ à $t_{12}$ considérés pour décrire le fonctionnement du dispositif de la figure 1 ainsi que les intervalles de temps $\varnothing_1$ à $\varnothing_{12}$ considérés.

La figure 2b représente des impulsions de tension $V_{P1}$ et $V_{P2}$ circulant sur les lignes de la matrice.

Les figures 2c et 2d représentent les tensions $V_A$ et $V_B$ aux points A et B de l'élément photosensible considéré.

La figure 2e représente les quantités de charge circulant dans l'élément photosensible considéré.

Sur le figure 2f, on a représenté, de façon symbolique la position ouverte ou fermée de l'interrupteur I appartenant à l'élément photosensible considéré.

On va examiner le fonctionnement du dispositif pendant les différentes phases $\varnothing_1$ à $\varnothing_{12}$.

Phase 1 :

On applique une impulsion de tension $V_{P1}$ sur l'ensemble des lignes de la matrice par l'intermédiaire du circuit d'adressage.

A l'instant $t_1$, l'amplitude du signal $V_P$, passe de 0 à $V_{P1}$ et à l'instant $t_2$, l'amplitude du signal $V_P$ passe de $V_{P1}$ à O.

La tension au point A suit, après charge de la capacité G la variation de tension intervenant sur les lignes, c'est-à-dire qu'à partir de l'instant $t_1$, $V_A$ augmente puis se stabilise à la valeur $V_c$ qui est la tension de coude ou de seuil de la photodiode D, ce qui polarise en direct la diode D dont la cathode est reliée à la masse par l'interrupteur I qui est passant.

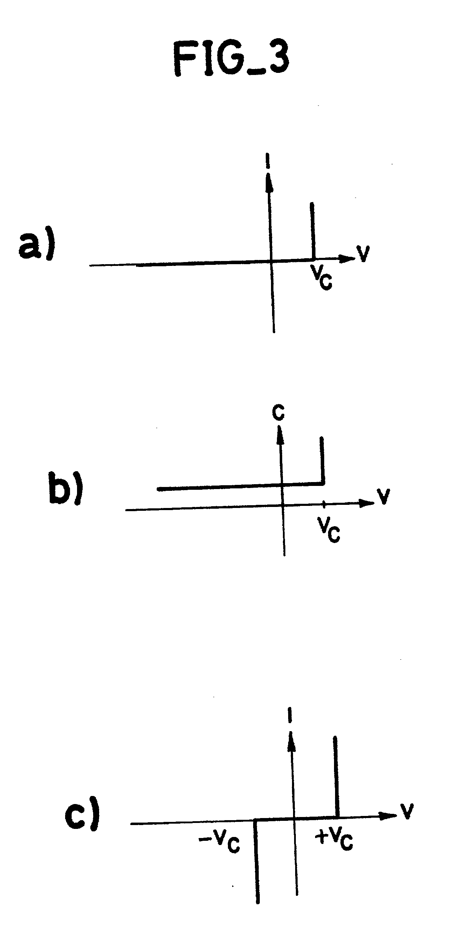

Pour simplifier l'explication du fonctionnement, on supposera que la diode D a une caractéristique C = f (V) telle que celle représentée sur la figure 3b. On peut cependant utiliser n'importe quel type de photodiode D, par exemple une photodiode du type PIN, PN ou Schottky.

Pendant la phase 1, l'interrupteur I est fermé comme cela est représenté sur la figure 2f. On supposera pour simplifier qu'il s'agit d'un interrupteur parfait ce qui explique que la tension $V_B$ soit nulle.

L'arrivée de l'impulsion $V_{P1}$ provoque la circulation d'un courant correspondant à une charge $Q_1$ - figure 2e.

### Phase 2

A l'instant $t_2$, $V_{P1}$ revient à zéro et la tension $V_A$ devient négative et égale à

$$- \frac{V_{P1} \cdot C_G}{C_G + C_D} \ ,$$

où $C_G$ est la valeur de la capacité G et où $C_D$ représente la capacité de la photodiode D.

On choisit généralement $C_G$ supérieure à $C_D$ pour que la polarisation du point A soit proche de $-V_{P1}$. On peut choisir par exemple $C_G = 10\ C_D$.

La photodiode D de l'élément photosensible considéré se trouve polarisée en inverse car sa cathode est toujours reliée à la masse ($V_B = O$) par l'interrupteur I toujours conducteur. La photodiode fonctionne alors dans le mode vidicon et va pouvoir détecter la lumière. Elle génère à partir de l'instant $t_2$ un courant d'obscurité $I_{OBS1}$ dont une fraction égale à

$$I_{OBS1} \cdot \frac{C_G}{C_G + C_D}$$

est injectée dans la colonne.

A l'instant $t_2$, il a circulation d'une quantité de charge $Q_2$ de signe contraire à celui de $Q_1$.

### Phase 3

Pendant cette phase, le dispositif reçoit le signal lumineux à analyser h s. On a représenté de façon symbolique sur la figure 2a l'application de ce flash lumineux. Ce flash crée un photocourant dans la photodiode D qui va avoir tendance à revenir à tension nulle. La tension $V_A$ augmente légèrement à partir de $t_3$. On appelle $Q_S$ la quantité de charge crée et séparée dans la photodiode D. La fraction

$$Q_3 = Q_S \cdot \frac{C_G}{C_G + C_D}$$

est injectée dans la colonne.

### Phase 4

C'est une phase d'attente qui sépare le flash lumineux de la lecture du dispositif. Elle peut éventuellement être supprimée. La tension $V_A$ est stable pendant cette phase. La tension $V_B$ est toujours nulle car l'interrupteur I est fermé.

Il y a circulation d'une quantité de charge $Q_4$.

Pendant les phases $\emptyset_2$ à $\emptyset_4$, la fraction égale à

$$I_{OBS1} \cdot \frac{C_G}{C_G + C_D}$$

du courant d'obscurité $I_{OBS1}$ est injectée dans la colonne. On ne compensera pas ce courant d'obscurité, mais il faut remarquer que l'intervalle de temps, pendant lequel il circule est faible devant un cycle d'imagerie complet - voir phase 7.

### Phase 5

A l'instant $t_5$, on ouvre tous les interrupteurs. La photodiode D génère un courant d'obscurité $I_{OBS2}$ qui n'est plus injecté dans la colonne mais qui s'accumule au point B. Le potentiel du point B se met à décroître avec une pente égale à $I_{OBS2}/C_D$. La charge maximale qu'il peut stocker égale $2V_c \cdot C_D$. Le potentiel du point A en première approximation reste constant.

Pendant cette phase $\emptyset_5$, et si l'on suppose comme c'est généralement le cas qu'on lit la matrice photosensible de la première ligne $L_1$ à la dernière $L_n$, on lit une à une les (p-1) premières lignes de la matrice

5

grâce à des signaux délivrés sur ces lignes par le circuit d'adressage, de la même façon qu'on lit la $p^{\text{ième}}$ ligne pendant les phases 6, 7, 8.

On constate que la lecture des (p-1) premières lignes n'est pas perturbée par la $p^{\text{ième}}$ ligne puisque pendant la phase $\varnothing_5$ les interrupteurs de la ligne $L_p$ sont ouverts.

## Phase 6

Cette phase $\varnothing_6$ marque le début de la lecture de la ligne $L_P$.

A l'instant $t_6$, on ferme les interrupteurs de la ligne $L_P$. Le point B est à nouveau relié à la masse et injecte alors dans la colonne une quantité des charges $Q_6$ correspondant à la fraction

$$I_{OBS2} \cdot (t_6 - t_5) \cdot \frac{C_D}{C_D + C_D}$$

de la charge d'obscurité stockée par le point B pendant la phase 5.

## Phase 7

On applique sur la $p^{\text{ième}}$ ligne et sur elle seule une impulsion de tension $V_{P2}$ d'amplitude supérieure à celle de $V_{P1}$.

Le potentiel du point A augmente et se stabilise à $V_c$ lorsque la photodiode D conduit. Du fait de la mise en direct de la photodiode D, il y a circulation d'une quantité de charge $Q_7$ de signe contraire à celui des charges $Q_2$, $Q_3$, $Q_4$, $Q_6$ et de même signe que $Q_1$ et $Q_5$. La quantité de charge $Q_7$ contient l'information signal au même titre que $Q_3$. Il faut remarquer que $Q_3$ n'est pas exploitable car le flash lumineux est envoyé simultanément à tout le dispositif et toutes les photodiodes débitent simultanément sur les colonnes qui fournissent la valeur moyenne du signal lumineux appliqué.

Selon l'invention, on va obtenir l'information signal à partir de la charge $Q_7$.

Le dispositif selon l'invention comporte des éléments photosensibles ayant chacun une capacité, une photodiode et un interrupteur. Il n'y a donc pas de courant continu qui circule à travers les éléments photosensibles.

En conséquence, si l'on suppose que les impulsions $V_{P1}$ et $V_{P2}$ sont identiques, on peut écrire : $\Sigma Q_i = 0$, avec i = 2 à 7. Du fait de la différence d'amplitude entre les impulsions $V_{P1}$ et $V_{P2}$, il faut écrire : $Q_i = C_G (V_{P2} - V_{P1})$ avec i = 2 à 7, ce qui donne :
$Q_7 = - (Q_2 + Q_3 + Q_4 + Q_5 + Q_6) + C_G (V_{P2} - V_{P1})$.

L'intégration sur les amplificateurs reliés aux colonnes des charges $Q_7$ provenant des photodiodes de la ligne $L_p$ permet donc d'obtenir l'information signal pour cette ligne.

Selon l'invention, on compense la fraction du courant d'obscurité $I_{OBS2}$ égale à

$$I_{OBS2} \cdot (t_6 - t_5) \frac{C_G}{C_G + C_D}$$

qui est injectée à l'instant $t_6$ sous forme de la charge $Q_6$ et qui correspond à l'accumulation du courant d'obscurité de $t_5$ à $t_6$ alors qu'on lisait les lignes $L_1$ à $L_{p-1}$.

Pour réaliser cette compensation, on somme dans les amplificateurs intégrateurs les charges $Q_6$ et $Q_7$.
$Q_6 + Q_7 = - (Q_2 + Q_3 + Q_4 + Q_5) + C_G (V_{P2} - V_{P1})$

On a donc éliminé la quantité de charges $Q_6$ provenant du courant d'obscurité $I_{OBS2}$.

En conséquence, en sommant les charges qui circulent entre l'instant $t_6$ où l'on ferme les interrupteurs de la ligne $L_p$ et l'instant $t_7$ où l'impulsion de lecture $V_{P2}$ est appliquée à la ligne $L_P$, on arrive à lire les éléments photosensible de la ligne $L_P$ et à compenser $Q_6$ stockée par la ligne $L_P$ alors qu'on lit les autres lignes - phase $\varnothing_5$.

Le courant d'obscurité délivré pendant la phase $\varnothing_5$ n'intervient plus ni pour sa valeur moyenne ni pour son bruit.

On fait se déverser ce courant au temps $t_7$ et on le compense en réalisant la somme $Q_6 + Q_7$.

Pour réaliser la somme $Q_6 + Q_7$, le circuit de lecture et de multiplexage assure la lecture de chaque photodiode de la ligne sélectionnée en sommant les charges qui circulent en commençant avant que les interrupteurs de la ligne sélectionnée soient fermés et en terminant alors que l'impulsion $V_{P2}$ est appliquée à la ligne sélectionnée.

En ce qui concerne le courant d'obscurité $I_{OBS1}$ dont il a été question pendant la phase 4, la somme $Q_6$

+ $Q_7$ montre qu'il n'intervient que pendant la phase 3 correspondant à l'éclairement signal et pendant les phases de sécurité 2 et 4 dont la durée peut être faible devant celle de la phase 5.

L'utilisation d'une impulsion de lecture $V_{P2}$ d'amplitude supérieure à l'impulsion de précharge $V_{P1}$ crée la circulation d'une charge supplémentaire $C_G$ ($V_{P2}$ - $V_{P1}$) pendant la phase 7 qui accélère le transfert de $Q_7$ sur la colonne. Sans cette charge supplémentaire, le transfert est lent.

En effet, lors de l'arrivée de l'impulsion $V_{P2}$, le point de polarisation de la photodiode D se trouve déplacé en direct, le déplacement instantané valant

$$ V_{P2} \cdot \frac{C_G}{C_G + C_D} \; , $$

puis le point de polarisation revient à une valeur d'équilibre $V_C$. Ce retour vers la valeur d'équilibre se fait selon une loi en $e^{-t/R(t)} \cdot C_G$, où $R(t)$ exprime les variations de la résistance dynamique de la photodiode en fonction du temps.

L'utilisation d'une impulsion $V_{P2}$ d'amplitude supérieure à $V_{P1}$ déplace la valeur moyenne du point de polarisation de la photodiode en direct dans une zone où sa résistance dynamique est plus faible, et donc accélère le phénomène de retour vers la valeur d'équilibre.

La phase 6 peut être supprimée. La quantité de charge qui circule lorsque la tension de ligne passe à $V_{P2}$ vaut alors $Q_6 + Q_7$. La fermeture des interrupteurs se fait simultanément avec le passage à $V_{P2}$.

Phase 8

A l'intant $t_8$, $V_{P2}$ revient à zéro. Il se produit une variation de $V_A$ analogue à celle qui a lieu à l'instant $t_2$. Le potentiel des points A de la ligne $L_P$ passe à

$$ - V_{P2} \cdot \frac{C_G}{C_G + C_D} \cdot $$

Comme les interrupteurs I sont toujours fermés, les photodiodes D des éléments photosensibles de la ligne $L_P$ se retrouvent polarisées en inverse.

Il y a circulation d'une quantité de charges $Q_8$.

Pour lire les charges signal, on peut sommer les charges $Q_6 + Q_7 + Q_8$. Par rapport à la somme $Q_6 + Q_7$, l'intérêt est que le terme constant, indépendant des charges-signal et de $I_{OBS2}$ est plus faible.

Il faut alors que le circuit de lecture et de multiplexage assure la lecture de chaque photodiode de la ligne sélectionnée en sommant les charges qui circulent en commençant avant que les interrupteurs de la ligne sélectionnée soient fermés, en poursuivant alors que l'impulsion $V_{P2}$ est appliquée à la ligne sélectionnée, et en terminant alors que l'impulsion $V_{P2}$ est revenue à zéro.

Phase 9

A l'instant $t_9$ on ouvre les interrupteurs de la ligne $L_P$ qui vient d'être lue. On lit alors les lignes $L_{P+1}$ à $L_n$ et leur lecture n'est pas perturbée par le courant d'obscurité des photodiodes de la ligne $L_P$ dont les interrupteurs sont ouverts.

L'ouverture de ces interrupteurs provoque la circulation d'une quantité de charge $Q_9$ dans le cas où les interrupteurs I ne sont pas parfaits. Comme au début de la phase 5, la tension $V_A$ reste constante, en première approximation, alors que la tension $V_B$ décroît. Pour lire les charges-signal, on peut réaliser la somme :
$Q_6 + Q_7 + Q_8 + Q_9$.

Il faut alors sommer les charges circulant avant que les interrupteurs de la ligne sélectionnée soient fermés et jusqu'à leur ouverture.

La lecture de la $P^{ième}$ ligne se fait en ouvrant l'interrupteur i sur la contre-réaction des amplificateurs intégrateurs juste avant la phase 6. On commence alors la sommation des charges. On peut lire les charges grâce au muliplexeur, lorsque les amplificateurs intégrateurs ont sommé les charges $Q_6 + Q_7$ ou bien $Q_6 + Q_7 + Q_8$ ou bien $Q_6 + Q_7 + Q_8 + Q_9$. Ensuite, on referme les interrupteurs i, de façon à remettre les capacités des intégrateurs à zéro avant l'arrivée des charges provenant de la ligne p+1.

A la fin de la phase 9, la lecture de toutes les lignes du dispositif est terminée. Avant de commencer le cycle d'imagerie suivant, on veut retrouver une même configuration de potentiels, c'est-à-dire qu'il faut pouvoir écrire pour le cycle d'imagerie qui se termine l'équation suivante :
$\Sigma Q_i = O$, ce qui s'écrit aussi, puisque $\Sigma Q_i = C_G(V_{P2} - V_{P1})$, avec i = 2 à 7 :

$Q_8 + Q_9 + Q_{10} + Q_{11} + Q_{12} = - Q_1 - C_G(V_{P2} - V_{P1})$, où $Q_{10}$, $Q_{11}$ et $Q_{12}$, sont les charges générées au cours des dernières phases 10, 11 et 12 du cycle d'imagerie.

La charge $Q_1$ étant positive, il faut pour que l'équation ci-dessus soit vérifiée que la condition suivante soit vérifiée : $| Q_8 + Q_9 + Q_{10} + Q_{11} + Q_{12}| \geqq |C_G . (V_{P2} - V_{P1}).|$

On va donc au cours des phases 10, 11 et 12, et en particulier au cours de la phase 11 générer des charges telles que l'inégalité précédente soit vérifié.

Phase 10

A l'instant $t_{10}$, on ferme tous les interrupteurs I du dispositif. Il y a circulation d'une quantité de charge $Q_{10}$ égale à

$$I_{OBS2} \cdot (t_{11} - t_{10}) \cdot \frac{C_G}{C_G + C_D} \cdot$$

Phase 11

Pendant cette phase, on éclaire les photodiodes pour les faire fuir et provoquer la circulation d'une quantité de charge $Q_{11}$ suffisante pour que l'inégalité suivante soit vérifiée :
$| Q_8 + Q_9 + Q_{10} + Q_{11} + Q_{12}| \geqq |C_G. (V_{P2} - V_{P1})|.$

On éclaire généralement simultanément tout le dispositif, on est donc amené à choisir une valeur moyenne pour $Q_8$ et pour $Q_9$.

On peut aussi ne pas tenir compte de $Q_8$ et $Q_9$ et ne s'attacher à satisfaire que la relation suivante :
$| Q_{10} + Q_{11} + Q_{12}| \geqq |C_G(V_{P2} V_{P1})|$, c'est-à-dire qu'il faut que la valeur absolue de la somme des charges ayant circulé après la lecture de toutes les lignes soit supérieur ou égale à $|C_G.(V_{P2} - V_{P1})|$

On appelle la phase 11 la phase de remise à zéro des photodiodes.

Dans le cas de la détection de rayons X, si le scintillateur placé devant le dispositif est opaque, on peut éclairer la face arrière du panneau. Il faut alors que le substrat sur lequel est réalisé le dispositif photosensible soit transparent. On peut utiliser un substrat en verre ou en quartz par exemple.

La quantité de charges $Q_{11}$ peut aussi être produite en appliquant aux lignes une impulsion de tension qui pousse les photodiodes D en inverse au-dela de leur tension de claquage, tout en restant dans les limites du claquage réversible, de façon à provoquer la circulation d'une quantité de charges $Q_{11}$ suffisante pour satisfaire l'inégalité citée plus haut dans le cas d'une remise à zéro par voie optique.

Phase 12

La phase 12 est une phase qui sépare un cycle d'imagerie du cycle suivant. Il y a circulation d'une quantité de charge $Q_{12}$.

Phase 1

Une nouvelle phase 1 commence ensuite avec l'application d'une impulsion de tension $V_{P1}$ à toutes les lignes du dispositif. La charge $Q_1$ qui circule évacue l'excédent de charges qui a pu être apporté lors de la phase 11. Il n'est donc pas nécessaire de calibrer précisément cette charge $Q_{11}$. On retrouve la même configuration électrique que lors de la phase 1 de l'image précédente.

Dans le mode de réalisation de l'invention qui vient d'être exposé, tous les interrupteurs sont fermés entre l'instant $t_{10}$ correspondant à la fin de la lecture du dispositif et l'instant $t_4$ du cycle d'imagerie suivant qui marque le début d'une nouvelle lecture du dispositif.

Il faut signaler que lorsqu'on applique le flash lumineux correspondant au signal à lire, il est possible de laisser les interrupteurs ouverts. Le courant s'accumule au point B. Il faut alors fermer les interrupteurs avant que ne commence la lecture du dispositif pour autoriser les charges-signal à se déverser sur les lignes et les colonnes.

En conséquence, les interrupteurs du dispositif doivent être fermés pendant les phases $\varnothing_1$ et $\varnothing_4$ alors que pendant les phases $\varnothing_2$ et $\varnothing_3$, ils peuvent être indifféremment ouverts ou fermés.

De même, les interrupteurs du dispositif peuvent être indifféremment fermés ou ouverts pendant les phases $\varnothing_{10}$ à $\varnothing_{12}$.

La solution préférée consiste à laisser les interrupteurs fermés pendant les phases 10, 11 et 12, et même de la phase 10 à la fin de la phase 4 du cycle d'imagerie suivant.

On peut utiliser divers modes de réalisation des interrupteurs I en série dans chaque élément photosensible.

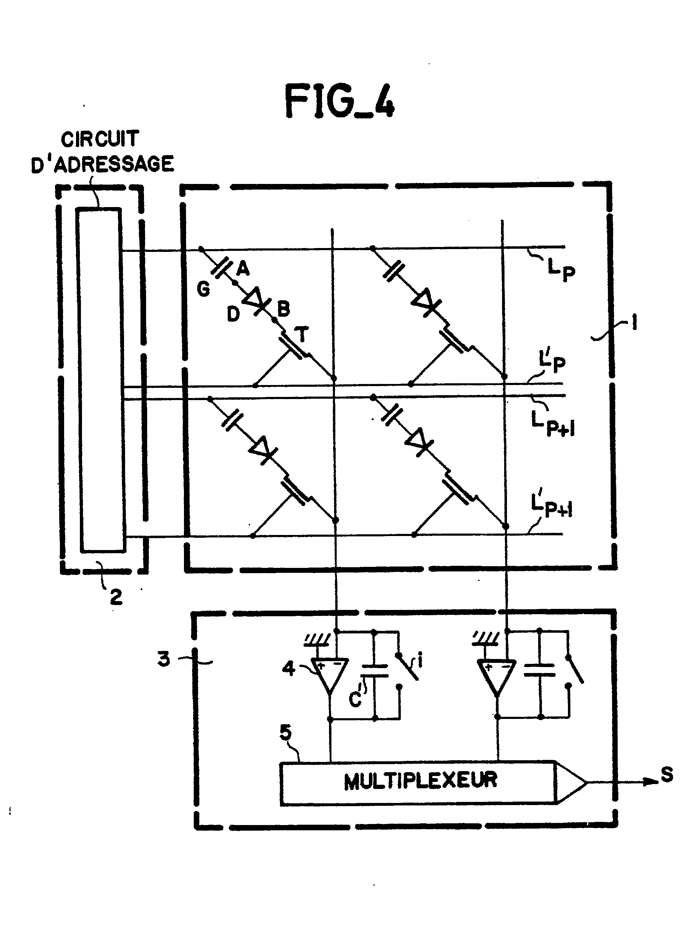

La figure 4 représente un mode de réalisation où chaque interrupteur I est constitué par un transistor T. On peut utiliser par exemple un TFT en silicium amorphe, un MOSFET ou un JFET.

La commande de l'ouverture ou de la fermeture des interrupteurs est alors assurée par un réseau supplémentaire de connexions horizontales $L'_P$ et $L'_{P+1}$ qui sont reliées à des sorties supplémentaires du circuit d'adressage.

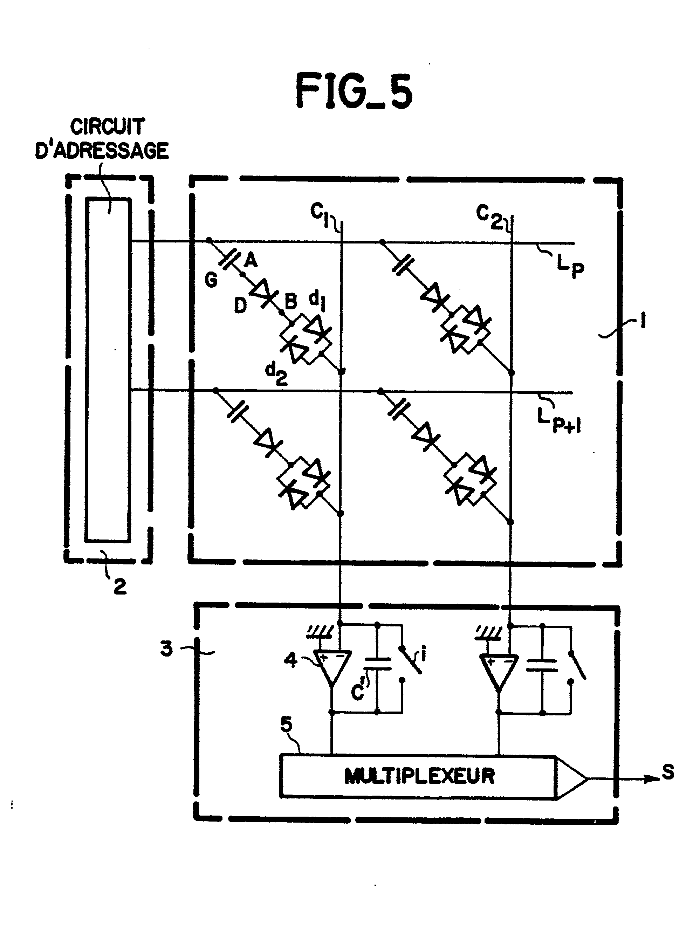

Dans le mode de réalisation de la figure 5, chaque interrupteur I est constitué de deux diodes montées tête-bêche, $d_1$ et $d_2$.

Pour pouvoir bien commander ces interrupteurs, il faut que la capacité $C_D$ de la photodiode soit très supérieure à la somme des capacités $C_{d1}$ et $C_{d2}$ des deux diodes. Ainsi, on considère pour simplifier dans l'explication de fonctionnement du dispositif que lorsqu'une tension est appliquée aux bornes de chaque élément photosensible, elle se retrouve aux bornes de l'interrupteur.

A titre d'exemple on peut choisir : $C_D = 50.(C_{d1} + C_{d2})$.

De même pour que l'interrupteur ainsi réalisé soit satisfaisant il faut que les diodes $d_1$ et $d_2$ suivent la caractéristique I = f (V) de la figure 3 a où le courant est nul pour une tension inférieure à la tension de seuil $V_C$. Cette hypothèse est justifiée car les diodes $d_1$ et $d_2$ ayant des capacités de faibles valeurs ont généralement de faibles surfaces et un courant de fuite faible. Sur cette caractéristique, les diodes ont aussi une impédance dynamique nulle pour une tension supérieure à $V_C$.

L'association de deux diodes $d_1$ et $d_2$ ayant la caractéristique I = f (V) de la figure 3a donne un interrupteur ayant la caractéristique I = f (V) de la figure 3c.

Entre les tensions - $V_C$ et + $V_C$, l'interrupteur est fermé, alors qu'il est ouvert pour des tensions supérieures à + $V_C$ et inférieures à - $V_C$.

Lorsqu'on utilise dans le dispositif selon l'invention, un interrupteur constitué de de deux diodes $d_1$ et $d_2$ montées tête-bêche, on commande cet interrupteur en modulant le potentiel des lignes de $2V_C$.

Pour simplifier l'explication du fonctionnement on considère de plus que les diodes $d_1$ et $d_2$, ont une capacité constante en fonction de la tension V, lorsque celle-ci est inférieur à $V_C$, comme cela est représenté sur la figure 3b.

Cette hypothèse est vérifiée en particulier si les diodes $d_1$ et $d_2$ sont des diodes PIN.

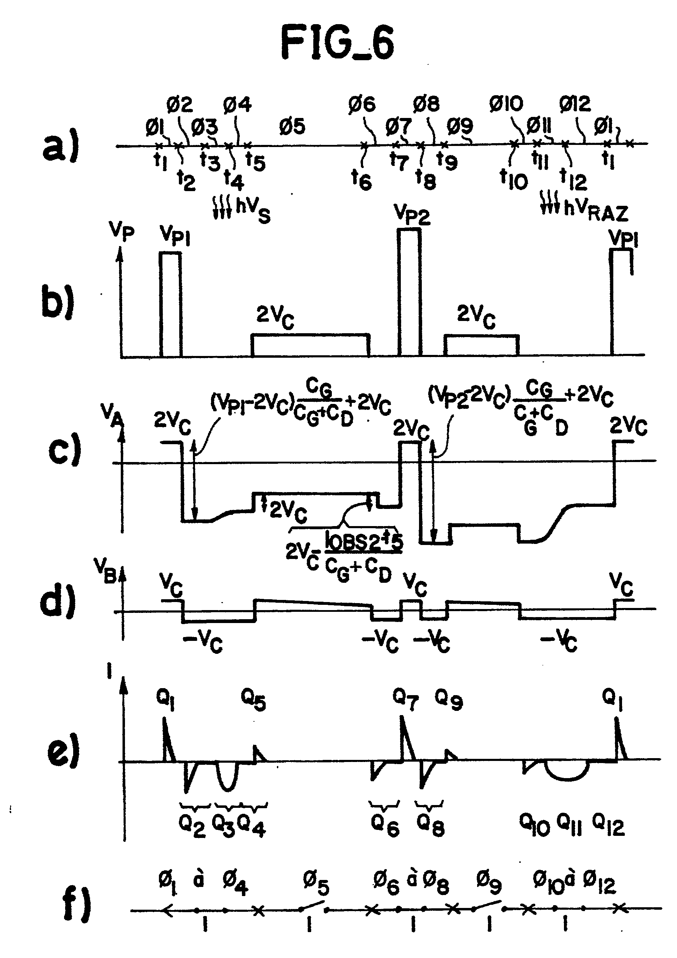

La figure 6 représente le chronogramme du dispositif de la figure 5 dont le fonctionnement est peu différent de celui de la figure 1.

Dans ce qui suit, on ne va pas reprendre l'explication détaillée du dispositif de la figure 5. En ce qui concerne les figures 5 et 6, on se contentera de souligner les différences par rapport aux figures 1 et 2, ces différences tenant essentiellement au fait que les interrupteurs I constitués de deux diodes $d_1$ et $d_2$ montées tête-bêche ne sont pas des interrupteurs parfaits.

Phase 1

La diode $d_1$ et la photodiode D se trouvent polarisées en direct par la tension $V_{P1}$. En conséquence, pendant l'application de la tension $V_{P1}$, la tension $V_A$ se fixe à $2V_C$ et la tension $V_B$ à $V_C$, si l'on admet que $V_C$ est la tension de seuil des diodes D, $d_1$ et $d_2$.

Phase 2

Lorsque l'impulsion $V_{P1}$ revient à zéro, la variation de tension est d'abord absorbée par les diodes $d_1$ et $d_2$ alors que la tension $V_B$ passe de + $V_C$ à - $V_C$. En fait la fraction de la variation de tension absorbée par les diodes $d_1$ et $d_2$ et par le point A est la suivante :

$$\frac{\dfrac{C_G \cdot C_D}{C_G + C_D}}{\dfrac{C_G \cdot C_D}{C_G + C_D} + C_{d1} + C_{d2}} \simeq 1$$

Ensuite le point A varie de

$$(V_{p1} - 2V_C) \; \frac{C_G}{C_G + C_D}$$

à partir de O.

On ne tiendra pas compte du courant d'obscurité des diodes $d_1$ et $d_2$ qui sont de faibles valeurs par rapport à ceux des photodiodes D.

9

Phases 3 et 4

Pas de changement.

Phase 5

Pour provoquer l'ouverture des interrupteurs, on envoie sur les lignes une tension égale à $2V_C$. La tension $V_A$ reste sensiblement constante mais subit une augmentation de $2V_C$ à l'instant $t_5$. De même, la tension $V_B$ passe à $+ V_C$ à l'instant $t_5$ pour décroître ensuite, avec une pente égale à $I_{OBS2}/C_D$.

Phase 6

On ferme les interrupteurs de la ligne $L_P$ en ramenant à zéro le potentiel de cette ligne. Le potentiel $V_B$ se fixe à $- V_C$.

Phase 7

La tension $V_A$ se stabilise à $2V_C$ et la tension $V_B$ à $V_C$.

Phase 8

Le point B varie de $2V_C$ et passe à $- V_C$ et le point A varie de

$$(V_{P2} - 2V_C). \ \frac{C_G}{C_G + C_D} + 2V_C$$

à partir de $2V_C$.

Phase 9

Le potentiel de la ligne $L_P$ passe à $2V_C$, pour provoquer l'ouverture des interrupteurs de cette ligne. A l'instant $t_9$, les tensions $V_A$ et $V_B$ varient de $+ 2V_C$. La tension $V_B$ passe à $+ V_C$ puis décroît avec une pente égale à $I_{OBS2}/C_D$.

L'expression de la somme $Q_6 + Q_7 + Q_8 + Q_9$ montre que les capacités $C_{d1}$ et $C_{d2}$ n'interviennent plus, ce qui est intéressant notamment pour éviter que des dispersions sur ces valeurs pour les différents éléments photosensibles n'entraînent des erreurs sur les signaux de lecture.

Phases 10, 11 et 12

On ferme tous les interrupteurs en ramenant l'ensemble des lignes du dispositif à zéro. La tension $V_A$ diminue de $2V_C$ puis augmente pendant la phase 11. La tension $V_B$ se stabilise à $- V_C$.

Le dispositif représenté sur la figure 5 présente l'avantage suivant. Lors de la lecture d'une ligne d'éléments photosensibles, les interrupteurs appartenant aux éléments photosensibles des autres lignes du dispositif sont ouverts. Toutes ces autres lignes ne sont en contact avec les colonnes que par l'intermédiaire de trois capacités en parallèle qui sont les capacités $C_{d1}$ et $C_{d2}$ des diodes $d_1$ et $d_2$ à l'état bloqué et la capacité de croisement $C_c$ des lignes et des colonnes. Ces capacités $C_{d1}$, $C_{d2}$ et $C_c$ sont faibles. La ligne qui est lue est en contact avec les colonnes par la capacité $C_G$ appartenant à chaque élément photosensible. En conséquence, la capacité $C_{col}$ d'une colonne d'un dispositif de q ligne, qui est vue par le circuit de lecture et de multiplexage lorsqu'on lit une ligne vaut :

$C_{col} = G_G + (q-1) . (C_{d1} + C_{d2} + C_c)$

$C_{col} \approx (q-1).(C_{d1} + C_{d2} + C_c)$, lorsque Q est grand.

Cette capacité $C_{col}$ peut être modérée et permet la conception d'un circuit de lecture et de multiplexage relativement simple.

Enfin, un autre avantage de ce dispositif est qu'il ne nécessite que la réalisation de diodes et de capacités et qu'il est donc particulièrement simple à réaliser, comme on va le voir sur un exemple de réalisation technologique.

De plus, ce dispositif ne nécessite pas, comme lorsque les interrupteurs sont constitués par des transistors, un réseau supplémentaire de lignes pour commander les transistors.

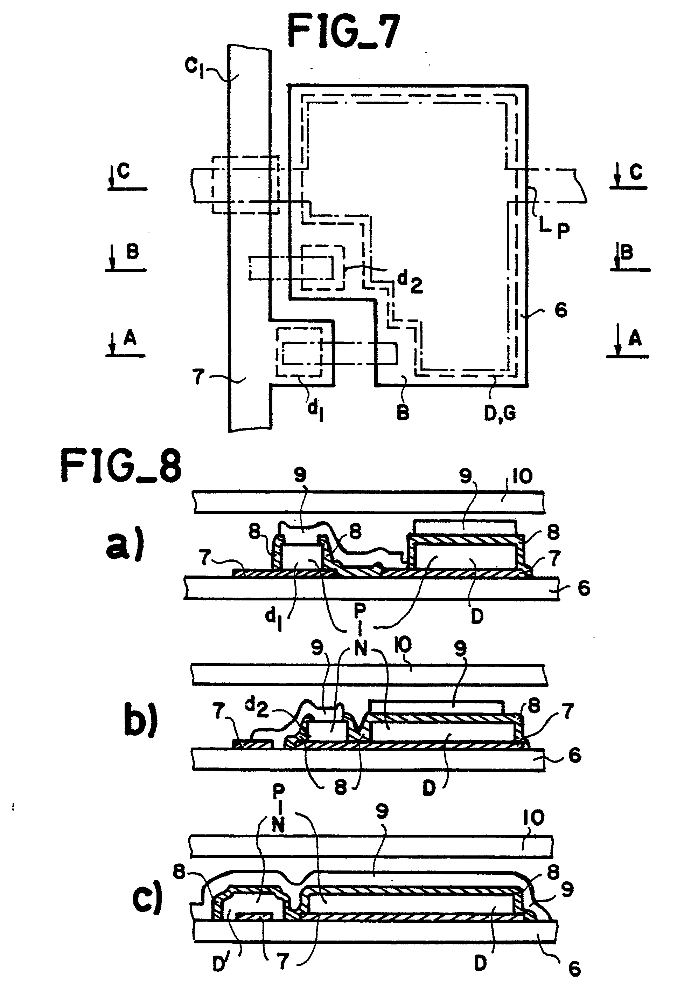

Les figures 7, 8a, b et c, et 9 concernent un mode de réalisation technologique du dispositif de la figure 5, et plus particulièrement d'un élément photosensible de ce dispositif.

La figure 7 est une vue de dessus de l'élément photosensible ainsi réalisé, et les figures 8a à c sont des vues en coupe selon les plans AA', BB' et CC' de ce dispositif.

On désigne par la référence 6 le substrat transparent sur lequel sont réalisés les éléments photosensibles.

Ce substrat porte un premier niveau conducteur 7 qui est utilisé pour réaliser les colonnes, le contact avec les colonnes de la diode $d_1$ - figure 8a - et le contact au point B de la diode D avec les diodes $d_1$ et $d_2$ - figures 8a et b.

Dans le cas où la remise à zéro optique est effectuée à travers le substrat, le premier niveau conducteur 7 doit être transparent.

Sur ce premier niveau conducteur 7, on dépose et on grave une couche PIN de façon à réaliser les diodes $d_1$, $d_2$ et D.

Sur la figure 7, les diodes $d_1$ et $d_2$ et D sont délimitées par des pointillés.

On dépose une couche d'isolant 8 qui sert dans la partie où il recouvre la diode D à constituer la capacité G et qui sert aussi à isoler le passage du deuxième niveau conducteur 9. On ouvre les quatre contacts suivants : un contact sur $d_1$, figure 8a - un contact sur $d_2$, figure 8b - un contact sur la colonne pour relier $d_2$ - un contact sur le contact situé sous la diode D pour relier la diode $d_1$ à la diode D.

On dépose la deuxième niveau conducteur 9 et on le grave pour relier la diode $d_1$ au point B - figure 8a, pour relier la diode $d_2$ à la colonne - figure 8b et pour réaliser les lignes.

Ce deuxième niveau conducteur 9 doit être transparent au rayonnement lumineux à analyser.

Sur les figures 8a, b et c, on a représenté un scintillateur 10 qui fait face à l'élément photosensible.

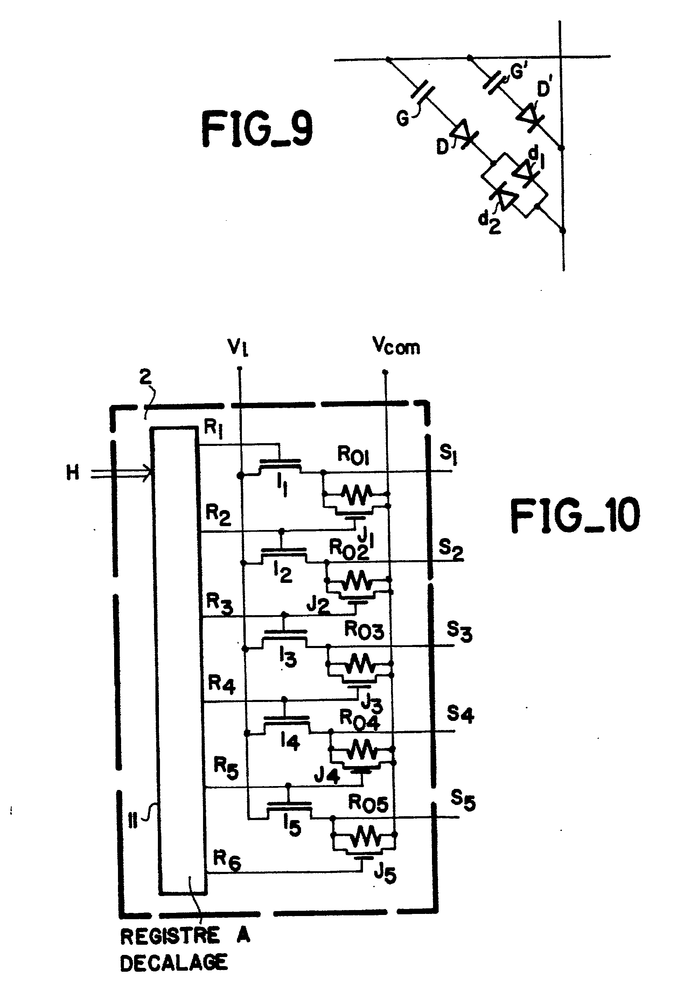

Sur le mode de réalisation de la figure 8c, on voit qu'on n'a pas réalisé exactement un élément photosensible tel que ceux représentés sur la figure 5, mais un élément photosensible tel que celui représenté sur la figure 9.

Il y a en parallèle sur chaque élément photosensible constitué par la mise en série d'une capacité G, d'une diode D et de deux diodes $d_1$ et $d_2$ montées tête-bêche, une capacité G' en série avec une diode D'. La capacité de l'ensemble constitué par la capacité G' et la diode D' en série est inférieure ou égale à la capacité qu'aurait présenté un simple isolant. De plus, ainsi, la probabilité de défaut par court-circuit est plus faible du fait de la diode D' qui se trouve polarisée en inverse si la capacité G' est en court-circuit.

Il est bien sûr possible si on le souhaite de ne conserver que l'isolant au point de croisement des lignes et des colonnes en gravant le dépôt PIN.

On a vu que les interrupteurs I de la figure 1 pouvaient être constitués par un transistor ou par deux diodes montées tête-bêche.

Il est également possible de réaliser ces interrupteurs par une seule diode en utilisant aussi bien la partie de sa caractéristique où elle est passante que la partie où elle est en inverse et fournit de façon sensiblement reproductible un courant de fuite. Il faut donc utiliser une diode dont on maîtrise sensiblement la tension de claquage inverse et dont cette tension n'est pas trop élevée.

Les interrupteurs I peuvent également être constitués d'éléments multi-couches du type NIN ou PIP.

La figure 10 représente un mode de réalisation du circuit d'adressage des lignes 2 qui est représenté sur les figures 1, 4 et 5.

Ce circuit comporte un registre à décalage logique 11, piloté par au moins une horloge H. Dans l'exemple de la figure 10, ce registre comporte six sorties $R_1$ à $R_6$. Des transistors $I_1$ à $I_5$ sont commandés par les sorties $R_1$ à $R_5$ et reliés entre une tension $V_1$ et une sortie du circuit d'adressage $S_1$ à $S_5$. Entre chaque sortie du circuit et une tension $V_{com}$, on connecte une résistance de rappel $R_{O1}$ à $R_{O5}$ qui impose la tension $V_{com}$ sur les sorties du circuit reliées à des lignes qui ne sont pas lues.

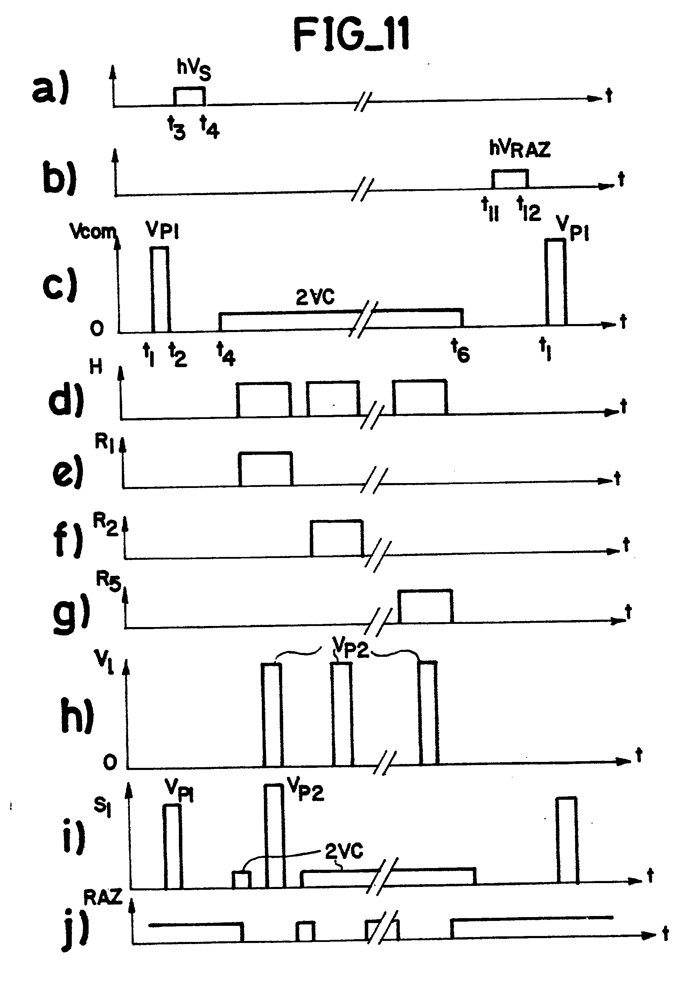

La figure 11 est un chronogramme concernant le dispositif de la figure 10.

La figure 11a concerne l'éclairement signal. On a représenté de façon symbolique le signal lumineux à analyser $h\nu_S$ qui est appliqué entre les instants $t_3$ et $t_4$.

De la même façon sur la figure 11b, on a indiqué que l'éclairement de remise à zéro $h\nu_{RAZ}$ est appliqué entre les instants $t_{11}$ et $t_{12}$.

Sur la figure 11c, on a représenté le signal $V_{com}$. Cette tension $V_{com}$ est constituée par les différentes tensions à appliquer aux lignes lorsqu'on ne les lit pas.

On voit sur la figure 11c que la tension $V_{com}$ comporte une impulsion de tension $V_{p1}$ de $t_1$ à $t_2$, et une tension égale à $2V_C$ de $t_4$ à $t_6$. Pendant le reste du temps, la tension $V_{com}$ est à zéro, c'est à dire à la masse.

Sur la figure 11d, on a représenté le signal d'horloge H du registre à décalage 11 de la figure 10.

Les figures 11e, f et g montrent que chaque impulsion d'horloge du signal H provoque le passage au niveau haut d'une sortie du registre. Sur ces figures, les sorties $R_1$, $R_2$... puis ensuite la sortie $R_5$ passent au niveau haut.

La figure 11h montre le signal $V_1$. Ce signal $V_1$ est constitué par les différentes tensions à appliquer à une ligne pour la lire. Ce signal $V_1$ est au niveau O, et alors que l'une des sorties du registre $R_1$, $R_2$...$R_5$ passe au niveau haut, le signal $V_1$ génère une impulsion de tension $V_{P2}$.

Sur la figure 11i, on a représenté les tensions sur la sortie $S_1$ qui commande la ligne $L_1$ du dispositif.

Tant que le signal $R_1$ n'est pas au niveau haut, le transistor $I_1$ est bloqué et la résistance de rappel impose la tension $V_{com}$ sur la sortie $S_1$. On voit sur la figure 11i que tant que le signal $R_1$ est au niveau bas,

la tension $V_{com}$ est imposée sur la sortie $S_1$. Lorsque le signal $R_1$ est au niveau haut, la tension $V_1$ se retrouve sur la sortie $S_1$.

Pour accélérer le retour à $V_{com}$ des lignes lorsque leur lecture est terminée, on a disposé dans le mode de réalisation de la figure 10 un transistor $J_1$ à $J_5$ en parallèle sur les résistances de rappel. Les transistors $J_1$ à $J_5$ sont du même type que les transistors $I_1$ à $I_5$ mais ils sont commandés par la sortie suivante du registre.

Ainsi le transistor $J_1$ est commandé par la sortie $R_2$, le transistor $J_2$ est commandé par la sortie $R_3$...

Lorsque la sortie $R_1$ est au niveau haut, la tension $V_1$ se retrouve sur la sortie $S_1$ et le transistor $J_1$ est bloqué.

Lorsque la sortie $R_1$ passe au niveau bas, la sortie $R_2$ passe au niveau haut et rend passant le transistor $J_1$, la tension $V_{com}$ se retrouve sur la sortie $S_1$.

On peut aussi utiliser des transistors $I_1$ à $I_5$ et $J_1$ à $J_5$ du même type, mais en faisant commander les transistors $J_1$ à $J_5$ par les sorties complémentaires du registre. Ainsi, le transistor $I_1$ est commandé par la sortie $R_1$ et le transistor $J_1$ par la sortie complémentaire $\overline{R_1}$ et ainsi de suite.

On peut aussi utiliser des transistors $I_1$ à $I_5$ et $J_1$ à $J_5$ qui sont complémentaires. Dans ce cas, les transistors $I_1$ et $J_1$ sont commandés par la même sortie du registre, de même pour les transistors $I_2$ et $J_2$... Ainsi, par exemple, le transistor $I_1$, est passant, alors que le transistor $J_1$ est bloqué.

Les transistors utilisés peuvent être des transistors MOS ou des TFT par exemple.

La figure 11j représente le signal de commande des interrupteurs i assurant la remise à zéro lorsqu'il est à l'état haut des capacités C' reliées aux amplificateurs opérationnels 4.

Le pilotage de ces interrupteurs i est synchrone de celui du circuit d'adressage.

Il y a remise à zéro pendant les impulsion de tension $V_{P1}$ de façon que les colonnes soient bien à tension nulle. Il y a aussi remise à zéro pendant les éclairements de signal et de remise à zéro pour éviter de saturer les intégrateurs.

Sur la figure 11j, les interrupteurs i sont ouverts de façon à réaliser la somme $Q_6 + Q_7 + Q_8$.

Les tensions délivrées par le circuit d'adressage sont définies à une constante près du fait de la capacité G qui fait partie de chaque élément photosensible. On peut donc choisir librement la tension de polarisation moyenne de chaque élément photosensible. Cela peut être intéressant lorsque des charges d'isolants liées à cette tension moyenne apparaissent.

Dans la description des figures 1, 2, 5 et 6 on a expliqué qu'il y a accumulation au point B du courant d'obscurité $I_{OBS2}$ des photodiodes, pendant les phases 5 et 9. Ceci se produit pour toutes les lignes que l'on n'est pas en train de lire.

Le potentiel du point B décroît avec une pente égale à $I_{OBS2}/C_D$ à partir de $+ V_C$ dans le cas d'un interrupteur constitué par deux diodes montées tête-bêche. La charge maximale que peut stocker le point B est égale à $2V_C \ C_D$, après quoi le point B se trouve à $- V_C$ et l'interrupteur I est fermé.

Lorsque la charge d'obscurité à stocker est supérieure à $2V_C . C_D$ ou bien dans le cas où le courant d'obscurité des diodes $d_1$ et $d_2$ ne peut être négligé lorsqu'on approche leur polarisation de $+$ ou $- V_C$, on va augmenter la charge maximale qui peut être compensée au point B en modifiant la polarisation du point B pendant les phases 5 et 9.

Lors des phases 5 et 9, le potentiel du point B décroît avec une pente égale à $I_{OBS2}/C_D$ - voir les figures 2d et 6d. Pour compenser cette décroissance, on va appliquer pendant les phases 5 et 9 des tensions de commande qui vont porter le point B à une tension nulle en moyenne. En particulier, on va appliquer des tensions de commande qui vont croître avec une pente égale à $I_{OBS2}/C_D$.

Les figures 10 à 11a à j concernent un mode de réalisation du circuit d'adressage et son chronogramme.

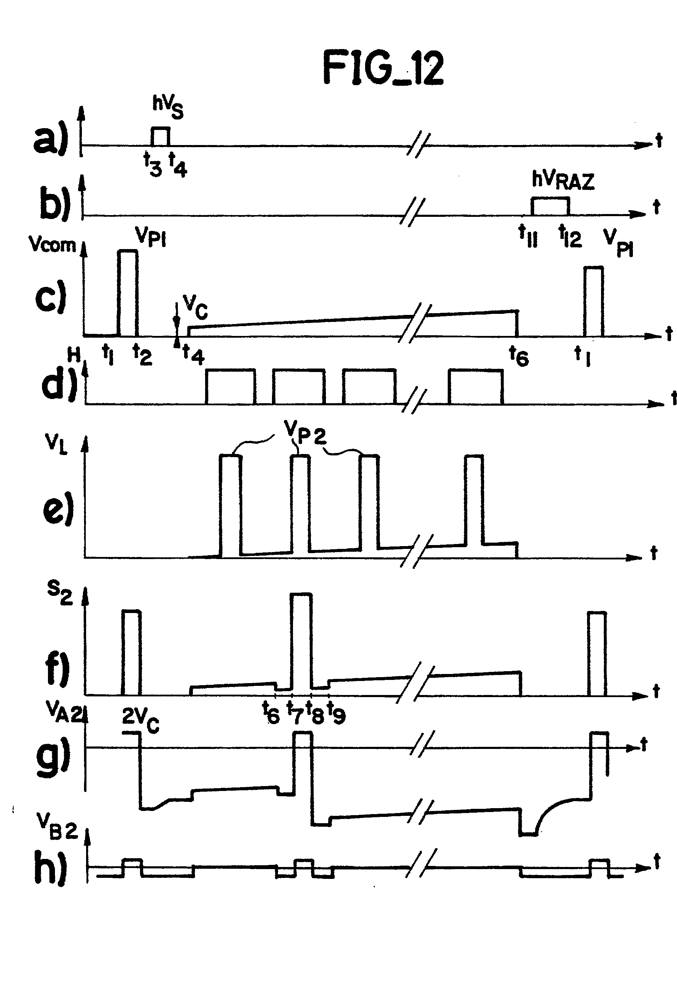

Les figures 12a à h représentent un chronogramme modifié de façon à augmenter la charge d'obscurité à stocker.

Les figures 12a et b sont identiques aux figures 11a et b. Sur la figure 12c, on a représenté le signal $V_{com}$ qui diffère de celui de la figure 11c car entre les instants $t_4$ et $t_6$ la tension n'est pas en permanence à $2V_C$.

Entre les instants $t_4$ et $t_6$, la tension $V_{com}$ est constituée par une rampe croissante de pente $I_{OBS2}$ moyen $/ C_D$, $I_{OBS2}$ moyen étant une valeur moyenne du courant $I_{OBS2}$. Cette rampe part de $+V_C$ à l'instant $t_4$ de façon à porter le point B à zéro à l'instant $t_4$. En effet sur la figure 6d, on voit que le point B est à $- V_C$ à l'instant $t_4$.

La figure 12d est semblable à la figure 11d, mais la figure 12e qui représente le signal $V_1$ diffère de la figure 11h car entre deux impulsions de tension $V_{P2}$ la tension ne revient pas à zéro. Les impulsions de tension $V_{P2}$ sont portées par une rampe qui part de zéro à l'instant $t_4$ puis croît avec une pente égale à $I_{OBS2}$ moyen $/ C_D$.

Il est indifférent que le niveau haut des impulsions soit constant à $V_{P2}$ comme sur la figure 12e ou suive une pente égale à $I_{OBS2}$ moyen $/ C_D$.

Sur la figure 12f, on a représenté le signal de la sortie $S_2$ du circuit d'adressage de la figure 10.

Entre les instants $t_6$ et $t_9$, le signal $V_1$ se retrouve sur la sortie $S_2$. A l'instant $t_9$, le signal $V_{com}$ est à nouveau appliqué sur la sortie $S_2$. L'utilisation d'un signal $V_1$ tel que celui de la figure 12e permet de diminuer le décalage lorsqu'on passe de la tension $V_1$ à la tension $V_{com}$. Or la tension $V_{com}$ est calculée pour que le point B soit proche de zéro.

Le signal $V_1$ est superposé à une rampe qui part de O alors que le signal $V_{com}$ est superposé à une rampe qui part de $V_c$ pour qu'il y ait un décalage de tension à $t_9$ permettant le retour du point B de $V_C$ à zéro.

Les figures 12g et 12h représentent les tensions $V_A$ et $V_B$ en deux points A et B de la ligne commandée par la sortie $S_2$.

Quelque soit le mode de réalisation choisi pour le circuit d'adressage et le circuit de lecture et de multiplexage, on est généralement amené à utiliser des signaux $V_{com}$, à appliquer aux lignes lorsqu'on ne les lit pas et $V_1$ à appliquer à une ligne pour la lire.

En conséquence, pour augmenter la charge d'obscurité qui peut être stockée un point B, lors de la lecture des éléments photosensibles ligne après ligne, les tensions $V_{com}$ et $V_1$ sont portées par une rampe croissante de pente égale à $I_{OBS2}$ moyen / $C_D$, où $I_{OBS2}$ moyen est une valeur moyenne du courant d'obscurité des photodiodes, de façon à porter le point B à une tension nulle en moyenne.

On a vu dans la description des figures 1 et 2 un mode de réalisation du circuit de lecture et de multiplexage 3.

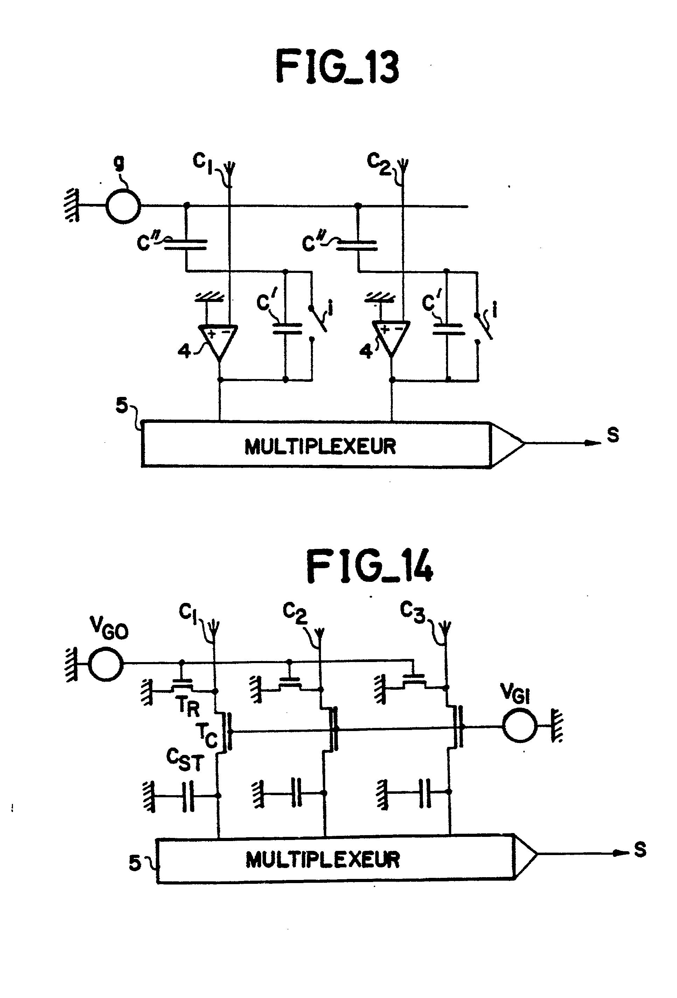

La figure 13 représente un mode de réalisation dans lequel les entrées négatives des amplificateurs sont reliées par l'intermédiaire d'une capacité $C''$ à un générateur G fournissant un signal de compensation qui permet d'ajuster la tension moyenne en sortie des amplificateurs 4.

Dans un mode de réalisation du circuit de lecture et de multiplexage 3, on utilise ce circuit pour générer les différentes tensions à appliquer aux lignes qui ne sont pas lues . On appelle $V_{com}$ cette tension représentée sur la figure 11c. Ce signal $V_{com}$ est appliqué à l'entrée positive des amplificateurs 4. On sait que ces amplificateurs recopient sur leur entrée négative la tension existant sur leur entrée positive. Dans ce mode de réalisation le circuit d'adressage, fournit une tension constante, qui peut être égale à la masse, excepté pendant les intervalles de temps où il fournit les tensions à appliquer aux lignes à lire. Dans les modes de réalisation du circuit d'adressage des figures 10 et 11, il faut alors remplacer la tension $V_{com}$ par une tension constante qui peut être la masse du dispositif.

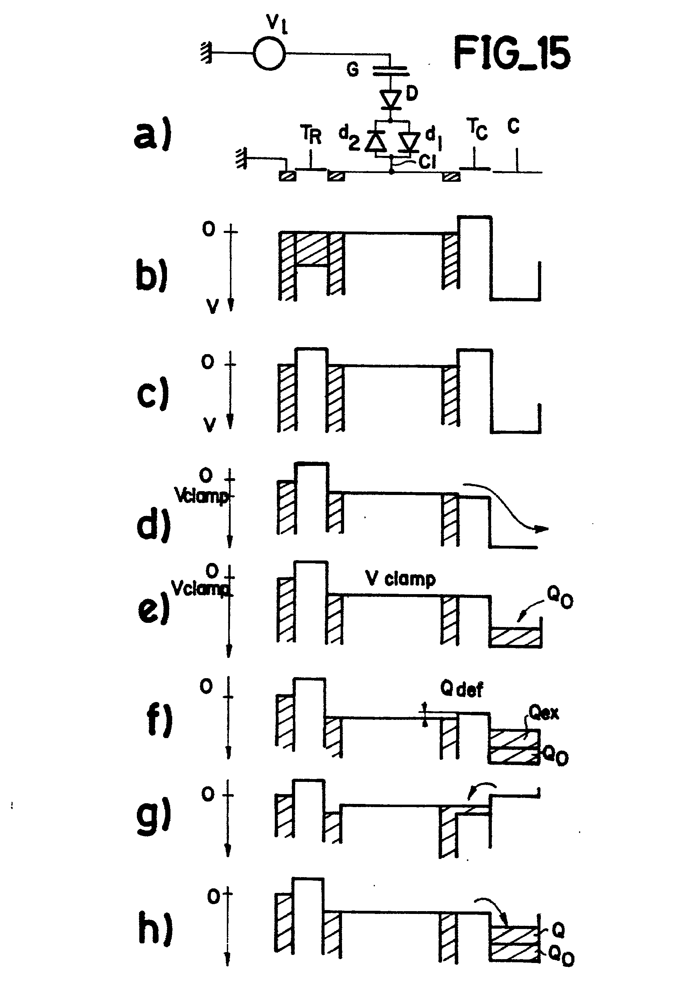

La figure 14 représente un mode de réalisation particulier du circuit d'adressage et de multiplexage 3. La figure 15 représente le chronogramme du dispositif de la figure 14.

Ce mode de réalisation permet de supprimer l'utilisation des amplificateurs opérationnels qui sont encombrants et consomment beaucoup de courant.

Dans ce mode de réalisation, le circuit de lecture et de multiplexage comporte :
- un transistor MOS $T_c$ relié entre une colonne $C_1$, $C_2$, $C_3$ et une entrée du multiplexeur 5. Les grilles de ces transistors reçoivent une tension de commande $V_{G1}$ ;
- un transistor MOS $T_R$ relié entre une tension constante qui peut être la masse du dispositif et une colonne. Les grilles de ces transistors reçoivent une tension de commande $V_{GO}$ ;
- une capacité de stockage $C_{ST}$ reliée entre chaque entrée du multiplexeur et une tension constante qui peut être la masse.

Sur les figures 15a à h, on a représenté une série d'éléments du dispositif de la figure 14, c'est-à-dire un transistor $T_R$, puis un transistor $T_c$ et une capacité $C_{ST}$. Au point commun entre les transistors $T_R$ et $T_C$, on a représenté une colonne $C_1$ reliée à un élément photosensible du type de la figure 5. Les transistors MOS utilisés sont, à titre d'exemple, à canal N. La capacité $C_{ST}$ est, à titre d'exemple, une capacité MOS. Les figures 15b à h représentent l'évolution au cours du temps du potentiel de surface dans le substrat. Les conventions utilisées sont celles des dispositifs à transfert de charge. En particulier, les potentiels de surface croissants sont dirigés vers le bas.

En dehors des phases de lecture du dispositif, c'est-à-dire pendant les phases 1, 2, 3, 4, 10, 11, 12, on impose sur les colonne une tension constante, qui est la masse dans l'exemple de la figure 14, en rendant passants en agissant sur leur tension de commande $V_{GO}$ les transistors $T_R$.

Cette étape est représentée sur la figure 15b.

Avant de commencer la lecture d'une ligne du dispositif, on bloque les transistors $T_R$ - voir figure 15c. On évacue les charges en surplus sur les colonnes - voir figure 15d - en augmentant la tension appliquée aux grilles des transistors $T_c$. Le potentiel des colonnes est fixé à une valeur $V_{clamp}$ proche de la tension $V_{G1}$ appliquée aux grilles des transistors $T_C$ - voir figure 15e -

Pendant la lecture du dispositif, il y a successivement injection puis pompage de charges sur les colonnes.

Selon les divers modes de réalisation du dispositif selon l'invention, il peut y avoir lorsqu'on lit les colonnes , soit un potentiel égal à $V_{clamp}$ auquel cas la charge transférée sur la capacité de stockage $C_{ST}$ est la bonne, soit un potentiel supérieur à $V_{clamp}$ - voir figure 15f.

On transfère sur chaque capacité $C_{ST}$ une quantité de charges $Q_o$. Ce transfert peut avoir lieu avant ou après que les charges à lire arrivent sur les colonnes.

Une fois la ligne lue, on transfère les charges stockées sous chaque capacité de stockage $C_{ST}$ vers les colonnes, puis on évacue les éventuelles charges en surplus vers les capacités de stockage - voir figure 15h.

Ainsi dans les cas ou il y a un déficit de charges $Q_{déf}$ sur les colonnes et un excédent de charges $Q_{ex}$ sur les capacités de stockage on comble le déficit et on obtient sur les capacités de stockage la quantité de charges Q qui contient l'information.

La quantité de charges $Q_0$ sert à mettre en oeuvre la technique dite de "fill and spill" qui est utilisée et sert aussi de charge d'entraînement.

## Revendications

1. Dispositif photosensible à l'état solide comportant ;
- un réseau de connexions horizontales ou lignes ($L_P$, $L_{P+1}$) et un réseau de connexions verticales ou colonnes ($C_1$, $C_2$) qui se croisent ;
- un élément photosensible qui relie chaque ligne et chaque colonne qui se croisent ;
- un circuit d'adressage (2) dont les sorties sont reliées aux lignes ;
- un circuit de lecture et de multiplexage (3) dont les entrées sont reliées aux colonnes ;
caractérisé en ce que : chaque élément photosensible est constitué par la mise en série d'une capacité (G), d'une photodiode (D) et d'un interrupteur électronique (I).

2. Dispositif selon la revendication 1 caractérisé en ce que la valeur de la capacité $C_G$ faisant partie de l'élément photosensible est supérieure à la valeur de la capacité de la photodiode $C_D$.

3. Dispositif selon la revendication 2, caractérisé en ce que la relation suivante est vérifié : $C_G = 10.C_D$.

4. Dispositif selon l'une des revendications 1 à 3, caractérisé en ce que chaque interrupteur électronique (I) est constitué de deux diodes $d_1$, $d_2$, disposées tête-bêche.

5. Dispositif selon la revendication 4, caractérisé en ce que la valeur de la capacité $C_D$ faisant partie de l'élément photosensible est très supérieure à la somme des capacités $C_{d1} + C_{d2}$ des deux diodes $d_1$, $d_2$ disposées tête-bêche.

6. Dispositif selon la revendication 5, caractérisé en ce que la relation suivante est vérifiée : $C_D = 50(C_{d1} + C_{d2})$.

7. Dispositif selon l'une des revendications 1 à 3, caractérisé en ce que chaque interrupteur électronique (I) est constitué par un transistor et en ce que ces interrupteurs sont commandés par l'intermédiaire d'un réseau supplémentaire de connexions horizontales ($L'_P$, $L'_{P+1}$) reliées à des sorties supplémentaires du circuit d'adressage.

8. Dispositif selon l'une des revendications 1 à 3, caractérisé en ce que chaque interrupteur électronique (I) est constitué par une seule diode.

9. Dispositif selon l'une des revendications 1 à 3, caractérisé en ce que chaque interrupteur électronique (I) est constitué par un élément multi-couche du type NIN ou du type PIP.

10. Dispositif selon l'une des revendications 1 à 9, caractérisé en ce que les photodiodes (D) sont du type PIN, PN ou Schottky.

11. Dispositif selon l'une des revendications 1 à 10, caractérisé en ce qu'il est utilisé pour la détection de rayons X et en ce qu'un scintillateur est utilisé pour convertir le rayonnement X en rayonnement visible.

12. Dispositif selon l'une des revendications 1 à 11, caractérisé en ce qu'il est utilisé pour la détection de rayons X et en ce que les photodiodes sont réalisées sur un substrat semiconducteur dont l'épaisseur est suffisante pour assurer la détection directe des rayons X.

13. Dispositif selon l'une des revendications 4 à 6, caractérisé en ce que lors de sa réalisation technologique, on adjoint en parallèle sur chaque élément photosensible, entre chaque ligne et chaque colonne qui se croisent, une capacité (G') en série avec une diode (D').

14. Dispositif selon l'une des revendications 1 à 13, caractérisé en ce que le circuit d'adressage comporte :
- un registre à décalages logique (11) piloté par au moins une horloge (H);
- une première série de transistors ($I_1$ à $I_5$) commandés par les sorties ($R_1$ à $R_5$) du registre (11) et reliés entre une tension $V_1$ et une sortie de circuit d'adressage ($S_1$ à $S_5$), cette tension $V_1$ étant constituée par les différentes tensions à appliquer à une ligne pour la lire ;
- une série de résistances de rappel ($R_{O1}$ à $R_{O5}$) connectées entre chaque sortie ($S_1$ à $S_5$) du circuit (2) et une tension $V_{com}$, cette tension $V_{com}$ étant constituée par les différentes tensions à appliquer aux lignes lorsqu'on ne les lit pas .

15. Dispositif selon la revendication 14, caractérisé en ce qu'il comporte :
- une seconde série de transistors ($J_1$ à $J_5$) commandés par les sorties ($R_1$ à $R_6$) du registre (11) et placés en parallèle sur les résistances de rappel, ($R_{O1}$ à $R_{O5}$) de façon à accélérer le retour à la tension $V_{com}$ des lignes lorsque leur lecture est terminée.

16. Dispositif selon la revendication 15, caractérisé en ce que les transistors de la première et de la seconde série ($I_1$ à $I_5$, $J_1$ à $J_5$) sont des transistors de même type et en ce que chaque couple de transistors appartenant à la première et à la seconde série qui commandent une même sortie du circuit d'adressage sont respectivement commandés par une sortie du registre et par la sortie suivante.

17. Dispositif selon la revendication 15, caractérisé en ce que les transistors de la première et de la seconde série sont des transistors de même type ($I_1$ à $I_5$, $J_1$ à $J_5$) et en ce que chaque couple de transistors appartenant à la première et à la seconde série qui commandent une même sortie ($S_1$ à $S_5$) du circuit d'adressage (2) sont respectivement commandés par une sortie du registre ($R_1$ à $R_6$) et par sa sortie complémentaire ($\bar{R}_1$ à $\bar{R}_6$).

18. Dispositif selon la revendication 15, caractérisé en ce que les transistors de la première et de la seconde série ($I_1$ à $I_5$, $J_1$ à $J_5$) sont des transistors complémentaires et en ce que chaque couple de transistors appartenant à la première et à la seconde série qui commandent une même sortie ($S_1$ à $S_5$) du circuit d'adressage (2) sont commandés par la même sortie ($R_1$ à $R_5$) du registre (11).

19. Dispositif selon l'une des revendications 1 à 18, caractérisé en ce que le circuit de lecture et de multiplexage (3) comporte un amplificateur opérationnel (4) monté en intégrateur qui est relié à chaque colonne ($C_1$, $C_2$) du dispositif, une capacité ($C'$) étant reliée entre l'entrée négative et la sortie de l'amplificateur dont l'entrée positive est à la masse et un interrupteur électronique (i) étant monté en parallèle sur chaque capacité, les sorties des amplificateurs étant reliés aux entrées d'un multiplexeur dont la sortie fournit le signal de sortie du dispositif.

20. Dispositif selon la revendication 19, caractérisé en ce que les entrées négatives des amplificateurs opérationnels sont reliées par l'intermédiaire d'une capacité ($C'$) à un générateur (G) fournissant un signal de compensation, de façon à ajuster la tension moyenne en sortie des amplificateurs.

21. Dispositif selon l'une des revendications 19 et 20, modifié en ce que l'entrée positive des amplificateurs opérationnels (4) montés en intégrateur n'est plus à la masse mais reçoit une tension ($V_{com}$) constituée par les différentes tensions à appliquer aux lignes lorsqu'on ne les lit pas et selon l'une des revendications 14 à 18, modifié en ce que la tension $V_{com}$ est une tension constante.

22. dispositif selon l'une des revendications 1 à 18, caractérisé en ce que le circuit de lecture et de multiplexage (3) comporte :
- un transistor MOS Tc relié entre chaque colonne et une entrée d'un multiplexeur ;
- un transistor MOS $T_R$ relié entre une tension constante et une colonne ;
- une capacité de stockage $C_{ST}$, reliée entre chaque entrée du multiplexeur et une tension constante.

23. Dispositif selon la revendication 4, caractérisé en ce que les diodes $d_1$ et $d_2$ sont des diodes PIN.

24. Dispositif selon l'une des revendications 1 à 23, caractérisé en ce que les photodiodes D sont du type PIN.

25. Procédé de lecture d'un dispositif photosensible selon l'une des revendications 1 à 24, caractérisé en ce que :
- 1°) - l'un des réseaux de connexions du dispositif reçoit, périodiquement, des impulsions de tension $V_{P1}$ qui font passer toutes les photodiodes du dispositif à l'état direct puis à l'état inverse, les interrupteurs étant fermés, alors que l'autre réseau est porté à un potentiel constant ;
- 2°) - entre deux impulsions de tension $V_{P1}$ successives :
- le signal lumineux à lire est appliqué au dispositif ;
- tous les interrupteurs sont ouverts ;
- on lit les éléments photosensibles reliés à chaque ligne du dispositif et pour cela, on ferme les interrupteurs des éléments photosensibles d'une ligne sélectionnée et le circuit d'adressage (2) envoie sur cette ligne une impulsion de tension, $V_{P2}$ qui fait passer les photodiodes de cette ligne à l'état direct puis à l'état inverse, l'amplitude de l'impulsion de tension $V_{P2}$ étant supérieure à celle de l'impulsion de tension $V_{P1}$, puis le circuit de lecture et de multiplexage (3) assure la lecture de chaque photodiode de la ligne sélectionnée en sommant les charges qui circulent en commençant avant que les interrupteurs de la ligne sélectionnée soient fermés et au moins jusqu'à ce que l'"impulsion $V_{P2}$ soit appliquée à la ligne sélectionnée, on ouvre ensuite les interrupteurs des éléments photosensibles de la ligne lue et on lit les éléments photosensibles reliés à une autre ligne du dispositif, et ainsi de suite jusqu'à ce que tout le dispositif soit lu ;
- on remet à zéro les photodiodes et on ferme les interrupteurs au moins avant l'impulsion de tension $V_{P1}$ suivante.

26. Procédé de lecture selon la revendication 25, d'un dispositif dans lequel chaque interrupteur électronique (1) est constitué de deux diodes $d_1$, $d_2$, disposées tête-bêche, caractérisé en ce que ces interrupteurs sont commandés en modulant le potentiel des lignes de $2V_c$ par l'intermédiaire du circuit d'adressage, $V_c$ étant la tension de seuil des diodes $d_1$, $d_2$.

27. Procédé de lecture selon l'une des revendications 25 ou 26, caractérisé en ce que tous les interrupteurs (1) sont fermés entre les instants correspondant à la dernière ligne lue ($t_{10}$) et à l'ouverture de tous les interrupteurs ($t_4$) avant la lecture de la première ligne du cycle d'imagerie suivant.

28. Procédé de lecture selon l'une des revendications 25 à 27, caractérisé en ce que la remise à zéro des photodiodes se fait en les éclairant pour les faire fuir et provoquer la circulation d'une quantité de charge $Q_{11}$ suffisante pour que la relation suivante soit vérifiée : |Somme des charges ayant circulé après lecture de toutes les lignes| $\geqq |C_G.(V_{P2}-V_{P1})|$.

29. Procédé de lecture selon l'une des revendication 25 à 28, caractérisé en ce que la remise à zéro des photodiodes (D) se fait en appliquant aux lignes une impulsion de tension qui pousse les photodiodes en inverse au-delà de leur tension de claquage, tout en restant dans les limites du claquage réversible, de façon à provoquer la circulation d'une quantité de charge suffisante $Q_{11}$ pour que la relation suivante soit vérifiée :

| Somme des charges ayant circulé après lecture de toutes les lignes|$\geq$ | $C_G.(V_{P2}-V_{P1}).$|

30.Procédé de lecture selon l'une des revendications 25 à 29 d'un dispositif selon la revendication 19, caractérisé en ce que les interrupteurs sont ouverts pour assurer la lecture des éléments photosensibles d'une ligne sélectionnée puis les interrupteurs sont fermés pour remettre les capacités à zéro avant la lecture des éléments photosensibles d'une autre ligne.

31. Procédé de lecture selon l'une des revendications 25 à 30, d'un dispositif selon la revendication 22, caractérisé en ce que :
- en dehors des instants où le dispositif est lu, on rend passants les transistors $T_R$ de façon qu'il imposent une tension constante sur les colonnes ;
- avant de lire une ligne d'éléments photosensibles, on bloque les transistors $T_R$, et on évacue les charges en surplus sur les colonnes en modulant les grilles des transistors $T_c$, ensuite, on transfère sur chaque capacité $C_{ST}$ une quantité de charges $Q_o$ ;
- une fois la ligne lue, on transfère les charges se trouvant sur chaque capacité $C_{ST}$ par dessus les grilles des transistors $T_C$ vers les colonnes, puis on évacue les éventuelles charges en surplus sur les colonnes par dessus les grilles des transistors $T_C$ vers les capacités $C_{ST}$.

32. Procédé de lecture selon l'une des revendications 25 à 31, caractérisé en ce que le circuit de lecture et de multiplexage (3) assure la lecture de chaque photodiode (D) de la ligne sélectionnée en sommant les charges qui circulent en commençant avant que les interrupteurs de la ligne sélectionnée soient fermés ($t_6$), en poursuivant alors que l'impulsion $V_{P2}$ est appliquée à la ligne sélectionnée, puis en terminant alors que l'impulsion revient à zéro ($Q_6+Q_7+Q_8$).

33. Procédé de lecture selon l'une des revendications 25 à 31, caractérisé en ce que le circuit de lecture et de multiplexage (3) assure la lecture de chaque photodiode (D) de la ligne sélectionnée en sommant les charges qui circulent en commençant avant que les interrupteurs de la ligne sélectionnée soient fermés et en terminant lorsque les interrupteurs sont ouverst ($Q_6+Q_7+Q_8+Q_9$).

34. Procédé de lecture selon l'une des revendications 25 à 33, caractérisé en ce qu'il reçoit :
- une tension $V_1$ constituée par les différentes tensions à appliquer à une ligne pour la lire ;
- une tension $V_{com}$ constituée par les différentes tensions à appliquer aux lignes lorsqu'on ne les lit pas ;
- et en ce que lors de la lecture des éléments photosensibles ligne après ligne, les tensions $V_{com}$ et $V_1$ sont portées par une rampe croissante de pente égale à $I_{OBS2}$ moyen / $C_D$, où $I_{OBS2}$ moyen est une valeur moyenne du courant d'obscurité des photodiodes, de façon à porter le point B à une tension nulle en moyenne.

## Claims

1. A solid state photosensitive device comprising:
– a network of horizontal connections or rows ($L_p$ and $L_{p+1}$) and a network of vertical connections or columns ($C_1$ and $C_2$) which intersect;
– a photosensitive element which connects each row and each column which intersect;
– an addressing circuit (2) whose outputs are connected with the rows;
– a read and multiplexing circuit (3) whose inputs are connected with the columns; characterized in that: each photosensitive element is constituted by the series arrangement of a capacitor (G), a photodiode (D) and an electronic switch (I).

2. The device as claimed in claim 1, characterized in that the capacitance of the capacitor $C_G$ forming a part of the photosensitive element is greater than the capacitance of the photodiode $C_D$.

3. The device as claimed in claim 2, characterized in that the following relationship is complied with: $C_G = 10 \cdot C_D$.

4. The device as claimed in any one of the preceding claims 1 through 3, characterized in that each electronic switch (I) is constituted by two diodes $d_1$ and $d_2$ placed in an antiparallel arrangement.

5. The device as claimed in claim 4, characterized in that the capacitance of the capacitor $C_D$ forming part of the photosensitive element is very much greater than the sum $C_{d1} + C_{d2}$ of the capacitances of the two diodes $d_1$ and $d_2$ placed in an antiparallel arrangement.

6. The device as claimed in claim 5, characterized in that the following relationship: $C_D = 50(C_{d1} + C_{d2})$, is complied with.

7. The device as claimed in any one of the preceding claims 1 through 3, characterized in that each electronic switch (I) is in the form of a transistor and in that the switches are controlled by the intermediary of a supplementary network of horizontal connections ($L'_p$ and $L'_{p+1}$) connected with supplementary outputs of the addressing circuit.

8. The device as claimed in any one of the preceding claims 1 through 3, characterized in that in each eletronic switch (I) is constituted by a single diode.

9. The device as claimed in any one of the preceding claims 1 through 3, characterized in that each electronic switch (I) is constituted by a multilayer element of the NIN or PIP type.

10. The device as claimed in any one of the preceding claims 1 through 9, characterized in that the photodiodes (D) are of the PIN, PN or Schottky type.

11. The device as claimed in any one of the preceding claims 1 through 10, characterized in that it is used for the detection of x-rays and in that a scintillator is used to convert the x-rays into visible rays.

12. The device as claimed in any one of the preceding claims 1 trough 11, characterized in that it is used for the detection of x-rays and in that the photodiodes are photodiodes produced on a semiconductor substrate whose thickness is sufficient in order to ensure the direct detection of the x-rays.

13. The device as claimed in any one of the preceding claims 4 through 6, characterized in that during the manufacture thereof each photosensitive element is joined in parallel, between each row and each column intersecting it, to a capacitor (G') in series with a diode (D').

14. The device as claimed in any one of the preceding claims 1 through 13, characterized in that the addressing circuit comprises:
– a logical shift register (11) controlled by at least one clock (H);
– a first series of transistors ($I_1$ to $I_5$) controlled by outputs ($R_1$ through $R_5$) of the register (11) and connected between a potenial $V_1$ an output of an addressing circuit ($S_1$ through $S_5$), said potential $V_1$ being constituted by the different potentials to be applied to a row to read same;
– a series of callback resistors ($R_{01}$ through $R_{05}$) connected between each output ($S_1$ through $S_5$) of the circuit (2) and a potential $V_{com}$, said potential $V_{com}$ being constituted by the different potentials to be applied to the row when same is not being read.

15. The device as claimed in claim 14, characterized in that it comprises:
– a second series of transistors ($J_1$ through $J_5$) controlled by outputs ($R_1$ through $R_6$) of the register (11) and placed in parallel with respect to the callback resistors ($R_{01}$ through $R_{05}$) in such a manner as to expedite the return to the potenial $V_{com}$ for the rows when the reading thereof has been terminated.

16. The device as claimed in claim 15, characterized in that the transistors of the first and of the second series ($I_1$ through $I_5$ and $J_1$ through $J_5$) are transistors of the same type and in that each pair of transistors belonging to the first and the second series which control a common output of the addressing circuit, are respectively controlled by an output of the register and by the following output.

17. The device as claimed in claim 15, characterized in that the transistors of the first and of the second series are transistors of the same type ($I_1$ through $I_5$ and $J_1$ through $J_5$) and in that each pair of transistors belonging to the the first and to the second series which control a common output ($S_1$ through $S_5$) of the addressing circuit (2) are respectively controlled by an output of the register ($R_1$ through $R_6$) and by its complementary output ($R_1$ through $R_6$).

18. The device as claimed in claim 15, characterized in that the transistors of the first and of the second series ($I_1$ through $I_5$ and $J_1$ through $J_5$) are complementary transistors and in that each pair of transistors belonging to the first and to the second series which control a common output ($S_1$ through $S_5$) of the addressing circuit (2), are controlled by the same output ($R_1$ through $R_5$) of the register (11).

19. The device as claimed in any one of the preceding claims 1 through 18, characterized in that the read and multiplexing circuit (3) comprises an operation amplifier (4) placed in circuit to act as an integrator which is connected to each column ($C_1$ and $C_2$) of the device, a capacitor (C') being connected between the negative input and the output of the amplifier, whose positive input is connected with ground and an electronic switch (i) being connected in parallel with each capacitor, the outputs of the amplifiers being connected with the inputs of a multiplexer whose output supplies the output signal of the device.

20. The device as claimed in claim 19, characterized in that the negative inputs of the operational amplifiers are connected by the intermediary of a capacitor (C') with a generator (G) supplying a compensation signal in such manner as to adjust the mean potential at the outputs of the amplifiers.

21. The device as claimed in claim 19 or claim 20, modified so that the positive input of the operational amplifiers (4) arranged as integrators is no longer connected with ground and receives a potential ($V_{com}$) constituted by the different potentials to be applied to the rows when they are not being read, and as claimed in any one of the preceding claims 14 through 18, modified so that the potential $V_{com}$ is a constant potential.

22. The device as claimed in any one of the preceding claims 1 through 18, characterized in that the read and multiplexing circuit (3) comprises:
– an MOS transistor Tc connected between each column and one input of a multiplexer;
– an MOS transistor $T_R$ connected between a constant potential and a column;
– a memory capacitor $C_{ST}$, connected between each input of the multiplexer and a constant potential.

23. The device as claimed in claim 4, characterized in that the diodes $d_1$ and $d_2$ are PIN diodes.

24. The device as claimed in any one of the preceding claims 1 through 23, characterized in that the photodiodes D are of the PIN type.

25. A method of reading a photosensitive device as claimed in any one of the preceding claims 1 through 24, characterized in that:

17

firstly, one of the connection networks of the device periodically receives potential pulses $V_{P1}$ which cause all the photodiodes of the device to change to the direct state and then to the inverse state, the switches being closed, while the other network is placed at a constant potential;

secondly, between two successive pulses of a potential $V_{P1}$:

– the light signal to be read is applied to the device;

– all the switches are opened;

– the photosensitive elements connected to each row of the device are read and for this the switches of the photosensitive elements of a selected row are closed and the addressing circuit (2) sends a potential pulse $V_{p2}$ along this row so as to cause the photodiodes of this row to be changed into the direct state and then into the inverse state, the amplitude of potential pulse $V_{p2}$ being greater than that of the potential pulse $V_{p1}$, then the read and multiplexing circuit (3) ensures the reading of each photodiode of the selected row by summating the charges which are circulating, beginning before the switches of the selected row have been closed and at least until the pulse $V_{p2}$ has been applied to the selected row, thereafter the switches of the photosensitive elements of the row which has been read are opened and the photosensitive elements which are connected to another row of the device are read and so on until all the device has been read; and

– the photodiodes are reset to zero and the switches are closed at least prior to the following potential pulse $V_{p1}$.

26. The method of reading as claimed in claim 25, as applied to a device in which each electronic switch (1) is constituted by two diodes d1 and d2 placed in an antiparallel arrangement, characterized in that the switches are controlled by modulating the potential of the rows by 2Vc by the intermediary of the addressing circuit, Vc being the threshold voltage of the diodes d1 and d2.

27. The method of reading as claimed in claim 25 or claim 26, characterized in that all the switches (1) are closed between the instants corresponding to the last row ($t_{10}$) read and to the opening of all the switches ($t_4$) before the reading of the first row of the following imaging cycle.

28. The method of reading as claimed in any of the preceding claims 25 through 27, characterized in that the resetting to zero of the photodiodes is performed by illuminating them in order to reset them and cause the circulation of a charge quantity $Q_{11}$ sufficing to ensure compliance with the following condition:
| sum of the charges having circulated after reading of all the rows | $\geq$ | $C_G \cdot (V_{p2}-V_{p1})$ |.

29. The method of reading as claimed in any one of the preceding claims 25 through 28, characterized in that the resetting to zero of the photodiodes (D) is performed by applying to the rows a potential pulse which drives the photodiodes inversely past their breakdown voltage while nevertheless keeping within the limits of reversible breakdown in such a manner as to cause the circulation of a charge quantity $Q_{11}$ sufficing for compliance with the following relationship:
| sum of the charges having circulated after the reading of all the rows | $\geq$ | $CG \cdot (V_{P2}-V_{P1})$ |.

30. The method of reading as claimed in any one of the preceding claims 25 through 29 as applied to a device as claimed in claim 19, characterized in that the switches are opened in order to ensure the reading of the photosensitive elements of a selected row and then the switches are closed in order to reset the capacitors to zero before the reading of the photosensitive elements of another row.

31. The method of reading as claimed in any one of the preceding claims 25 through 30, as applied to a device as claimed in claim 22, characterized in that:

– at times when the device is not being read, the transistors $T_R$ are turned on so that they apply a constant potential to the columns:

– before reading a row of photosensitive elements the transistors $T_R$ are turned off and the surplus charges are removed from the columns by modulating the gates of the transistors Tc and then a charge quantity $Q_0$ is transferred to each capacitor $C_{ST}$;

– and once a row has been read, the charges at each capacitor $C_{ST}$ are transferred over the gates of the transistors to the columns and then any surplus charges on the columns are removed above the gates of the transistors $T_C$ to the capacitors $C_{ST}$.

32. The method of reading as claimed in any one of the preceding claims 25 through 31, characterized in that the read and multiplexing circuit (3) ensures the reading of each photodiode (D) of the selected row by summating the charges circulating, beginning before the switches of the selected row are closed ($t_6$), continuing while the pulse $V_{P2}$ is applied to the selected row and ending when the pulse returns to zero ($Q_6+Q_7+Q_8$).

33. The method of reading as claimed in any one of the preceding claims 25 through 31, characterized in that in that the read and multiplexing circuit (3) ensures the reading of each photodiode (D) of the selected row by summating the charges which circulate, beginning before the switches of the selected row have been closed and ending when the switches are open ($Q_6+Q_7+Q_8+Q_9$).

34. The method of reading as claimed in any one of the preceding claims 25 through 33, characterized in that it receives:

– a potential $V_1$ constituted by the different potentials to be applied to a row in order to read the same;

– a potential $V_{com}$ constituted by different potentials to be applied to the rows when they are not being read; and

– in that at the time of reading the photosensitive elements row by row the potentials $V_{com}$ and $V_1$ are incremented along an ascending slope with an angle equal to $I_{OBS2mean}/C_D$, wherein $I_{OBS2mean}$ is a mean value of the dark current of the photodiodes in such a manner as to bring the point B to a potential which has a mean value of zero.

**Patentansprüche**

1. Lichtempfindliche Vorrichtung von Festkörperbauart, mit
- einem Raster von horizontalen Verbindungen oder Zeilen ($L_p$, $L_{p+1}$) und einem dieses Raster kreuzenden Raster von vertikalen Verbindungen oder Spalten ($C_1$, $C_2$);
- einem lichtempfindlichen Element, das jeweils jede Zeile mit jeder die jeweilige Zeile kreuzenden Spalte verbindet;
- einer Adressierungsschaltung (2), deren Ausgänge mit den Zeilen verbunden sind;
- einer Lese- und Multiplexschaltung (3), deren Eingänge mit den Spalten verbunden sind;
dadurch gekennzeichnet, daß jedes lichtempfindliche Element durch die Reihenschaltung einer Kapazität (G), einer Fotodiode (D) und eines elektronischen Unterbrechers (I) gebildet ist.

2. Vorrichtung gemäß Anspruch 1, dadurch gekennzeichnet, daß der Wert $C_G$ der einen Teil des lichtempfindlichen Elements bildenden Kapazität größer ist als der Wert $C_D$ der Kapazität der Fotodiode.

3. Vorrichtung gemäß Anspruch 2, dadurch gekennzeichnet, daß die folgende Beziehung verwirklicht ist: $C_G = 10C_D$.

4. Vorrichtung gemäß einem der Ansprüche 1 bis 3, dadurch gekennzeichnet, daß jeder elektronische Unterbrecher (I) aus zwei parallel geschalteten und entgegengesetzt orientierten Dioden ($d_1$, $d_2$) gebildet ist.

5. Vorrichtung gemäß Anspruch 4, dadurch gekennzeichnet, daß der Wert $C_D$ der einen Teil des lichtempfindlichen Elementes bildenden Kapazität viel größer ist als die Summe der Kapazitäten $C_{d1} + C_{d2}$ der zwei parallel und entgegengesetzt geschalteten Dioden ($d_1$, $d_2$).

6. Vorrichtung gemäß Anspruch 5, dadurch gekennzeichnet, daß die folgende Beziehung verwirklicht ist:
$C_D = 50 (C_{d1} + C_{d2})$.

7. Vorrichtung gemäß einem der Ansprüche 1 bis 3, dadurch gekennzeichnet, daß jeder elektronische Unterbrecher (I) durch einen Transistor gebildet wird und daß diese Unterbrecher durch ein dazwischengeschaltetes zusätzliches Raster von horizontalen Verbindungen ($L_p'$, $L_{p+1}'$), die mit zusätzlichen Ausgängen der Adressierungsschaltung verbunden sind, gesteuert werden.

8. Vorrichtung gemäß einem der Ansprüche 1 bis 3, dadurch gekennzeichnet, daß jeder elektronische Unterbrecher (I) durch eine einzige Diode gebildet ist.

9. Vorrichtung gemäß einem der Ansprüche 1 bis 3, dadurch gekennzeichnet, daß jeder elektronische Unterbrecher (I) durch ein Mehrschichtenelement von NIN- Bauart oder von PIP-Bauart gebildet wird.

10. Vorrichtung gemäß einem der Ansprüche 1 bis 9, dadurch gekennzeichnet, daß die Fotodioden (D) von PIN-, PN- oder Schottky-Bauart sind.

11. Vorrichtung gemäß einem der Ansprüche 1 bis 10, dadurch gekennzeichnet, daß sie zur Erfassung von Röntgenstrahlen verwendet wird und daß ein Szintillator verwendet wird, um die Röntgenstrahlung in sichtbare Strahlung umzuwandeln.

12. Vorrichtung gemäß einem der Ansprüche 1 bis 10, dadurch gekennzeichnet, daß sie für die Erfassung von Röntgenstrahlen verwendet wird und daß die Fotodioden auf einem Halbleitersubstrat hergestellt sind, dessen Dicke ausreicht, um die direkte Erfassung der Röntgenstrahlen zu gewährleisten.

13. Vorrichtung gemäß einem der Ansprüche 4 bis 6, dadurch gekennzeichnet, daß bei ihrer technischen Fertigung parallel zu jedem lichtempfindlichen Element jeweils zwischen jede Zeile und jede die jeweilige Zeile kreuzende Spalte eine mit einer Diode (D') in Reihe geschaltete Kapazität (G') angeordnet wird.

14. Vorrichtung gemäß einem der Ansprüche 1 bis 13, dadurch gekennzeichnet, das die Adressierungsschaltung umfaßt:
- ein Schieberegister (11), daß von wenigstens einem Taktgeber (H) ferngesteuert wird;
- eine erste Reihe von Transistoren ($I_1$ bis $I_5$), die durch die Ausgänge ($R_1$ bis $R_5$) des Registers (11) gesteuert werden und mit einer Spannung $V_1$ und einem Ausgang der Adressierungsschaltung ($S_1$ bis $S_5$) verbunden sind, wobei die Spannung $V_1$ von den verschiedenen Spannungen, die zum Lesen einer Reihe anzulegen sind, gebildet wird;
- eine Reihe von Rückstellwiderständen ($R_{01}$ bis $R_{05}$), die jeweils zwischen einen Ausgang ($S_1$ bis $S_5$) der Schaltung (2) und eine Spannung $V_{com}$ geschaltet sind, wobei die Spannung $V_{com}$ von den verschiedenen Spannungen gebildet wird, die an die Reihen anzulegen sind, wenn diese nicht gelesen werden.

15. Vorrichtung gemäß Anspruch 14, dadurch gekennzeichnet, daß sie umfaßt:
- eine zweite Reihe von Transistoren ($J_1$ bis $J_5$), die durch die Ausgänge ($R_1$ bis $R_6$) des Registers (11) gesteuert werden und parallel zu den Rückstellwiderständen ($R_{01}$ bis $R_{05}$) angeordnet sind, derart,

daß sie die Rückstellung der Spannung $V_{com}$ an den Reihen beschleunigen, wenn deren Lesen beendet ist.

16. Vorrichtung gemäß Anspruch 15, dadurch gekennzeichnet, daß die Transistoren der ersten und der zweiten Reihe ($I_1$ bis $I_5$, $J_1$ bis $J_5$) Transistoren von gleicher Bauart sind und daß jeder Verbindungspunkt von zur ersten und zur zweiten Reihe gehörigen Transistoren, die denselben Ausgang der Adressierungsschaltung steuern, von einem Registerausgang bzw. dem darauf folgenden Ausgang gesteuert wird.

17. Vorrichtung gemäß Anspruch 15, dadurch gekennzeichnet, daß die Transistoren der ersten und der zweiten Reihe ($I_1$ bis $I_5$, $J_1$ bis $J_5$) Transistoren von gleicher Bauart sind und daß jeder Verbindungspunkt von zur ersten und zur zweiten Reihe gehörigen Transistoren, die den gleichen Ausgang ($S_1$ bis $S_5$) der Adressierungsschaltung (2) steuern, jeweils durch einen Ausgang des Registers ($R_1$ bis $R_6$) bzw. durch dessen komplementären Ausgang ($\overline{R_1}$ bis $\overline{R_6}$) gesteuert wird.

18. Vorrichtung gemäß Anspruch 15, dadurch gekennzeichnet, daß die Transistoren der ersten und der zweiten Reihe ($I_1$ bis $I_5$, $J_1$ bis $J_5$) komplementäre Transistoren sind und daß jeder Verbindungspunkt von zu der ersten und der zweiten Reihe gehörigen Transistoren, die denselben Ausgang ($S_1$ bis $S_5$) der Adressierungsschaltung (2) steuern, vom gleichen Ausgang ($R_1$ bis $R_5$) des Registers (11) gesteuert wird.

19. Vorrichtung gemäß einem der Ansprüche 1 bis 18, dadurch gekennzeichnet, daß die Lese- und Multiplexschaltung (3) einen Operationsverstärker (4), der als Integrator geschaltet und mit jeder Reihe ($C_1$, $C_2$) der Vorrichtung verbunden ist, eine Kapazität (C'), die zwischen den negativen Eingang und den Ausgang des Verstärkers, dessen positiver Eingang geerdet ist, geschaltet ist, und einen elektronischen Unterbrecher (i), der parallel zu jeder dieser Kapazitäten geschaltet ist, umfaßt, wobei die Ausgänge der Verstärker mit den Eingängen eines Multiplexers verbunden sind, dessen Ausgang das Ausgangssignal der Vorrichtung liefert.

20. Vorrichtung gemäß Anspruch 19, dadurch gekennzeichnet, daß die negativen Eingänge der Operationsverstärker über eine Kapazität (C") mit einem Generator (G) verbunden sind, der ein Kompensationssignal liefert, derart, daß damit die mittlere Spannung der Ausgänge der Verstärker eingestellt wird.

21. Vorrichtung gemäß einem der Ansprüche 19 und 20, dadurch abgewandelt, daß der positive Eingang der als Integratoren geschalteten Operationsverstärker (4) nicht mehr geerdet ist, sondern daß an ihm eine Spannung ($V_{com}$) anliegt, die durch die verschiedenen Spannungen gebildet wird, die an die Reihen angelegt werden, wenn sie nicht gelesen werden, und gemäß einem der Ansprüche 14 bis 18, dadurch abgewandelt, daß die Spannung $V_{com}$ eine konstante Spannung ist.

22. Vorrichtung gemäß einem der Ansprüche 1 bis 18, dadurch gekennzeichnet, daß die Lese- und Multiplexschaltung (3) umfaßt:
- einen MOS-Transistor ($T_C$), der jeweils zwischen eine Zeile und einen Eingang eines Multiplexers geschaltet ist;
- einen MOS-Transistor ($T_R$), der zwischen eine konstante Spannung und eine Spalte geschaltet ist;
- eine Speicherkapazität ($C_{ST}$), die jeweils zwischen einen Eingang des Multiplexers und eine konstante Spannung geschaltet ist.

23. Vorrichtung gemäß Anspruch 4, dadurch gekennzeichnet, daß die Dioden ($d_1$, $d_2$) PIN-Dioden sind.

24. Vorrichtung gemäß einem der Ansprüche 1 bis 23, dadurch gekennzeichnet, daß die Fotodioden (D) von PIN- Bauart sind.

25. Verfahren zum Lesen einer lichtempfindlichen Vorrichtung gemäß einem der Ansprüche 1 bis 24, dadurch gekennzeichnet, daß

1) - eines der Verbindungsnetze der Vorrichtung periodisch Spannungsimpulse $V_{P1}$ empfängt, die sämtliche Fotodioden der Vorrichtung in den direkten Zustand und dann in den invertierten Zustand versetzt, so daß die Unterbrecher geschlossen sind, während das andere Netz auf einem konstanten Potential gehalten wird;

2) - zwischen zwei aufeinanderfolgenden Spannungsimpulsen $V_{P1}$:
- das zu lesende Lichtsignal an die Vorrichtung gegeben wird;
- sämtliche Unterbrecher geöffnet sind;
- die mit jeweils einer Zeile der Vorrichtung verbundenen lichtempfindlichen Elemente gelesen werden, wozu die Unterbrecher der lichtempfindlichen Elemente einer ausgewählten Zeile geschlossen werden und die Adressierungsschaltung (2) an diese Zeile einen Spannungsimpuls $V_{P2}$ schickt, der die Fotodioden dieser Zeile in den direkten und dann in den invertierten Zustand versetzt, wobei die Amplitude des Spannungsstoßes $V_{P2}$ größer ist als diejenige des Spannungsstoßes $V_{P1}$, wozu ferner die Lese- und Multiplexschaltung (3) das Lesen jeder Fotodiode der ausgewählten Zeile gewährleistet, indem sie die Ladungen summiert, die zu Beginn, bevor die Unterbrecher der ausgewählten Reihe geschlossen werden und mindestens so lange, bis der Impuls $V_{P2}$ an die ausgewählte Zeile angelegt wird, zirkulieren, und wozu schließlich die Unterbrecher der lichtempfindlichen Elemente der gelesenen Zeile geöffnet werden und die lichtempfindlichen Elemente, die mit einer anderen Zeile der Vorrichtung verbunden sind, gelesen werden, bis auf diese Weise in der Folge die gesamte Vorrichtung gelesen ist;
- die Fotodioden auf Null zurückgestellt und die Unterbrecher wenigstens bis zum folgenden Spannungsimpuls $V_{P1}$ geschlossen bleiben.

26. Leseverfahren gemäß Anspruch 25 für eine Vorrichtung, in der jeder elektronische Unterbrecher (1) aus zwei parallel geschalteten und entgegengesetzt angeordneten Dioden ($d_1$, $d_2$) aufgebaut ist, dadurch gekennzeichnet, daß die Unterbrecher über die Adressierungsschaltung durch Modulation des Reihenpotentials mit zwei $2V_C$ gesteuert werden, wobei $V_C$ die Schwellenspannung der Dioden ($d_1$, $d_2$) ist.

27. Leseverfahren gemäß einem der Ansprüche 25 oder 26, dadurch gekennzeichnet, daß sämtliche Unterbrecher (I) zwischen den Momenten geschlossen sind, die dem Ende des Lesens der letzten gelesenen Reihe ($t_{10}$) und dem Öffnen sämtlicher Unterbrecher (t4) vor dem Lesen der ersten Reihe des folgenden Bilderstellungszyklus entsprechen.

28. Leseverfahren gemäß einem der Ansprüche 25 bis 27, dadurch gekennzeichnet, daß die Zurückstellung der Fotodioden auf Null durch deren Bestrahlung geschieht, um sie auf Durchlaß zu schalten und die Zirkulation einer Ladungsmenge $Q_{11}$ hervorzurufen, die ausreicht, damit die folgende Beziehung erfüllt ist:

| Summe derjenigen Ladungen, die nach dem Lesen sämtlicher Reihen zirkuliert sind $| \geq |\ C_G(V_{P2} - V_{P1})|$.

29. Leseverfahren gemäß einem der Ansprüche 25 bis 28, dadurch gekennzeichnet, daß die Rückstellung der Fotodioden (D) durch Anlegen eines Spannungsimpulses an die Reihen geschieht, der die Fotodioden invertierend und innerhalb der Grenzen eines reversiblen Durchbruchs über deren Durchbruchsspannung hinaus treibt, derart, daß die Zirkulation einer Ladungsmenge $Q_{11}$ bewirkt wird, die ausreicht, um die folgende Beziehung zu erfüllen:

| Summe derjenigen Ladungen, die vor dem Lesen sämtlicher Reihen zirkuliert sind $| \geq |\ C_G(V_{P2} - V_{P1})|$.

30. Leseverfahren gemäß einem der Ansprüche 25 bis 29 für eine Vorrichtung gemäß Anspruch 19, dadurch gekennzeichnet, daß die Unterbrecher geöffnet sind, um das Lesen der lichtempfindlichen Elemente einer ausgewählten Zeile zu gewährleisten, und daß danach die Unterbrecher geschlossen werden, um vor dem Lesen der lichtempfindlichen Elemente einer weiteren Zeile die Kapazitäten auf Null zurückzustellen.

31. Leseverfahren gemäß einem der Ansprüche 25 bis 30 für eine Vorrichtung gemäß 22, dadurch gekennzeichnet, daß

- außerhalb derjenigen Momente, in denen die Vorrichtung gelesen wird, die Transistoren ($T_R$) durchlässig bleiben, derart, daß sie an die Spalten eine konstante Spannung anlegen;
- vor dem Lesen einer Reihe von lichtempfindlichen Elementen die Transistoren ($T_R$) blockiert werden und die überschüssigen Ladungen in den Spalten durch Modulation der Gates der Transistoren ($T_C$) abgesaugt werden und schließlich an jede Kapazität ($C_{ST}$) eine Ladungsmenge ($Q_O$) übertragen wird:
- noch einmal in der gelesenen Reihe die in jeder Kapazität ($C_{ST}$) befindlichen Ladungen über die Gates der Transistoren ($T_C$) hinweg zu den Spalten übertragen werden und dann die in den Spalten möglicherweise überschüssigen Ladungen über die Gates der Transistoren ($T_C$) an die Kapazitäten ($C_{ST}$) abgesaugt werden.

32. Leseverfahren gemäß einem der Ansprüche 25 bis 31, dadurch gekennzeichnet, daß die Lese- und Multiplexschaltung (3) das Lesen einer jeden Fotodiode (D) der ausgewählten Zeile gewährleistet, indem sie die Ladungen, die bei Beginn, vor dem Schließen der Unterbrecher der ausgewählten Zeile ($t_6$) und fortgesetzt während der Eingabe des Impulses $V_{P2}$ an die ausgewählte Zeile, zirkulieren, und indem sie dann, wenn der Impuls auf Null absinkt, die Zirkulation der Ladungen ($Q_6 + Q_7 + Q_8$) beendet.

33. Leseverfahren gemäß einem der Ansprüche 25 bis 31, dadurch gekennzeichnet, daß die Lese- und Multiplexschaltung (3) das Lesen einer jeden Fotodiode (D) der ausgewählten Zeile gewährleistet, indem sie die Ladungen, die zu Beginn, bevor die Unterbrecher der ausgewählten Linie geschlossen werden, zirkulieren, aufsummiert und indem sie die Zirkulation der Ladungen ($Q_6 + Q_7 + Q_8 + Q_9$) beendet, wenn die Unterbrecher geöffnet werden.

34. Leseverfahren gemäß einem der Ansprüche 25 bis 33, dadurch gekennzeichnet, daß

- die Vorrichtung eine Spannung ($V_1$) empfängt, die aus den verschiedenen Spannungen, die zum Lesen einer Zeile angelegt werden, zusammengesetzt ist;
- die Vorrichtung eine Spannung ($V_{com}$) empfängt, die aus den verschiedenen Spannungen, die an diejenigen Zeilen, die nicht gelesen werden, angelegt werden, zusammengesetzt ist; und
- während des Lesens der lichtempfindlichen Elemente Zeile für Zeile die Spannungen $V_{com}$ und $V_1$ auf einem ansteigenden Wert gehalten werden, der mit einer Steilheit (Mittelwert von $I_{OBS2}$)/$C_D$ wächst, wobei der (Mittelwert von $I_{OBS2}$) ein Mittelwert des Dunkelstroms der Fotodioden ist, derart, daß der Punkt B im Mittel auf einer Null-Spannung gehalten wird.

# FIG_1

EP 0 237 365 B1

FIG_2

# FIG_3

# FIG_4

CIRCUIT
D'ADRESSAGE

L$_P$

L$'_P$

L$_{P+I}$

L$'_{P+I}$

G
A
D
B
T

I

2

3

4
C
i

5

MULTIPLEXEUR

S

# FIG_5

FIG_6

# FIG_7

# FIG_8

a)

b)

c)

# FIG_9

# FIG_10

REGISTRE A DECALAGE

FIG_11

# FIG_12

# FIG_13

# FIG_14

FIG_15